(19) **Europäisches Patentamt / European Patent Office / Office européen des brevets**

(11) **EP 4 764 240 A1**

(12) **EUROPEAN PATENT APPLICATION**
published in accordance with Art. 153(4) EPC

(43) Date of publication:
**24.06.2026 Bulletin 2026/26**

(21) Application number: **24854153.4**

(22) Date of filing: **07.08.2024**

(51) International Patent Classification (IPC):
**F16C 19/06** *(2006.01)*    **F16C 19/52** *(2006.01)*
**F16C 33/58** *(2006.01)*    **F16C 33/66** *(2006.01)*

(52) Cooperative Patent Classification (CPC):
**F16C 19/06; F16C 19/52; F16C 33/58; F16C 33/66**

(86) International application number:
**PCT/JP2024/028244**

(87) International publication number:
**WO 2025/037563 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.08.2023 JP 2023131986
18.04.2024 JP 2024067717**

(71) Applicant: **NTN Corporation
Osaka-shi Osaka 530-0005 (JP)**

(72) Inventors:
• **KONAGAI, Naoya
Kuwana-shi, Mie 511-0867 (JP)**

• **OKUNO, Takahiro
Kuwana-shi, Mie 511-0867 (JP)**
• **KUZUYA, Hiroto
Kuwana-shi, Mie 511-0867 (JP)**
• **KAWAMURA, Mitsuo
Kuwana-shi, Mie 511-0867 (JP)**
• **SAKAGUCHI, Tomoya
Kuwana-shi, Mie 511-0867 (JP)**

(74) Representative: **Bockhorni & Brüntjen
Partnerschaft
Patentanwälte mbB
Agnes-Bernauer-Straße 88
80687 München (DE)**

(54) **METHOD FOR DESIGNING ROLLING BEARING**

(57)    A first mathematical formula is prepared that allows a decision to be made about a rolling bearing (10) including an inner ring (11), an outer ring (12), a plurality of rolling elements (13), and a lubricant (LQ). It is decided according to use conditions for the rolling bearing (10) whether or not a first mathematical formula satisfies a second mathematical formula, the first mathematical formula being expressed as:

$$F = f(\alpha, \beta, \gamma, \delta) \quad \cdots \quad (1),$$

the second mathematical formula being expressed as:

$$F \leq 10 \quad \cdots \quad (2).$$

When calculating a parameter for the lubricant (LQ), the lubricant (LQ) is divided into a first region and a second region. A characteristic value of an imaginary element assumed for the first and second regions in an imaginary electric circuit corresponding to the rolling bearing (10) is obtained.

Processed by Luminess, 75001 PARIS (FR)

FIG.1

**Description**

TECHNICAL FIELD

The present invention relates to a method of designing a rolling bearing.

BACKGROUND ART

In recent years, most of fan motors, three-phase motors, servo motors, and the like used in motors for industrial machines are controlled by inverter devices. Such control will be hereinafter referred to as inverter control. The inverter control is performed to improve efficiency. A rotation shaft of a motor under inverter control is supported by a rolling bearing.
Under inverter control, an alternating-current (AC) voltage and an AC frequency input to the motor are controlled from the viewpoint of adjustment of the rotation speed of the motor. As the switching frequency output from the inverter device rises, the frequency of occurrence of a high shaft voltage in the motor increases. The shaft voltage means a potential difference generated between a shaft of a rotating body such as a motor and another member. Due to the shaft voltage, a potential difference may be generated between rolling elements and outer and inner rings in a rolling bearing incorporated in the motor. When the potential difference increases, it exceeds the dielectric breakdown voltage of an oil film of a lubricant between the rolling elements and the outer and inner rings (bearing rings). Then, discharge occurs between the rolling elements and the outer and inner rings (the bearing rings), so that damage called electrolytic corrosion occurs inside the bearing.
As electrolytic corrosion progresses, stripe-patterned irregularities called ridge marks are formed on rolling contact surfaces of the rolling elements or the outer and inner rings. Ridge marks may cause noise and vibrations in the bearing. Thus, a bearing devised to suppress formation of a ridge mark on a rolling contact surface has been under development.
For example, Japanese Patent Nos. 4599769 (PTL 1) and 4177057 (PTL 2) each disclose an invention for giving electrical conductivity to a bearing by using electrically conductive grease and an electrically conductive seal.

CITATION LIST

PATENT LITERATURE

PTL 1: Japanese Patent No. 4599769
PTL 2: Japanese Patent No. 4177057

SUMMARY OF INVENTION

TECHNICAL PROBLEM

Each of the electrically conductive grease and the electrically conductive seal disclosed in PTL 1 and PTL 2 generally has a high volume resistivity of $10^4$ Ωcm or more and $10^8$ Ωcm or less. This makes it difficult to suppress the shaft voltage occurring in the motor due to the inverter device. Thus, in the rolling bearing incorporated in the motor, dielectric breakdown may occur in the oil film of the lubricant.
The present invention has been made in view of the above problems. An object of the present invention is to provide a method of designing a rolling bearing capable of suppressing ridge marks caused by electrolytic corrosion.

SOLUTION TO PROBLEM

In a method of designing a rolling bearing according to the present disclosure, a first mathematical formula is prepared that allows a decision to be made as to whether or not suppression of electrolytic corrosion in a rolling bearing is enabled, the rolling bearing including an inner ring, an outer ring disposed on an outer circumferential side of the inner ring, a plurality of rolling elements rollably disposed between the inner ring and the outer ring, and a lubricant. Configurations of the inner ring, the outer ring, and the plurality of rolling elements are determined based on use conditions for the rolling bearing. The first mathematical formula is expressed as:

$$F = f(\alpha, \beta, \gamma, \delta) \ldots (1),$$

where $\alpha$ denotes a mechanical parameter for the inner ring, the outer ring, and the plurality of rolling elements, $\beta$ denotes a parameter for the lubricant, $\gamma$ denotes a constant for other parameters, and $\delta$ denotes a parameter obtained from the use conditions. A step of determining includes a step of deciding whether or not a second mathematical formula is satisfied according to the use conditions, the second mathematical formula being expressed as:

$$F \leq 10 \ ... \ (2).$$

The step of determining includes a first parameter calculating step of obtaining a parameter $\beta$ for the lubricant. In the first parameter calculating step, the lubricant is divided into a first region of the lubricant and a second region of the lubricant in a region in which a first rolling contact surface and a second rolling contact surface approach each other to form an ellipse, the first region being located between the first rolling contact surface and the second rolling contact surface, the second region being other than the first region in the region, the first rolling contact surface being a rolling contact surface of at least one of the inner ring and the outer ring, the second rolling contact surface being a rolling contact surface of each of the rolling elements. A characteristic value of an imaginary element assumed for the first region and the second region in an imaginary electric circuit corresponding to the rolling bearing is obtained.

In a method of designing a rolling bearing according to the present disclosure, a first mathematical formula is prepared that allows a decision to be made as to whether or not suppression of electrolytic corrosion in a rolling bearing is enabled, the rolling bearing including an inner ring, an outer ring disposed on an outer circumferential side of the inner ring, a plurality of rolling elements rollably disposed between the inner ring and the outer ring, and a lubricant. Configurations of the inner ring, the outer ring, and the plurality of rolling elements are determined based on use conditions for the rolling bearing. The first mathematical formula is expressed as:

$$F = f(\alpha, \beta, \gamma, \delta) \ ... \ (1),$$

where $\alpha$ denotes a mechanical parameter for the inner ring, the outer ring, and the plurality of rolling elements, $\beta$ denotes a parameter for the lubricant, $\gamma$ denotes a constant for other parameters, and $\delta$ denotes a parameter obtained from the use conditions. The step of determining includes a step of deciding whether or not a second mathematical formula is satisfied according to the use conditions, the second mathematical formula being expressed as:

$$F \leq 10 \ ... \ (2).$$

ADVANTAGEOUS EFFECTS OF INVENTION

According to the present disclosure, a rolling bearing and an electric motor capable of suppressing ridge marks caused by electrolytic corrosion can be provided.

BRIEF DESCRIPTION OF DRAWINGS

Fig. 1 is a schematic cross-sectional view showing a configuration of a rolling bearing according to a present embodiment.
Fig. 2 is a schematic cross-sectional view showing a configuration of an electric motor including the rolling bearing in Fig. 1 according to the present embodiment.
Fig. 3 is an equivalent circuit in which each of components of the rolling bearing is assumed as an electrical element.
Fig. 4 is a graph showing an example of a result of a simulation performed using an electric circuit in Fig. 3.
Fig. 5 is a flowchart showing an overview of a method of designing the rolling bearing according to the present embodiment.
Fig. 6 is a flowchart showing an overview of a rolling bearing configuration determining step (S20) in the method of designing the rolling bearing according to the present embodiment.
Fig. 7 is a schematic diagram showing a model for calculating a parameter for a lubricant.
Fig. 8 is a flowchart showing an overview of a method of manufacturing the rolling bearing according to the present embodiment.
Fig. 9 is a schematic diagram of a model corresponding to the rolling bearing in Fig. 1 and used in a first parameter calculating step in Example 4.
Fig. 10 is an equivalent circuit in which each of components of a rolling bearing in Fig. 9 is assumed as an electrical element.

Fig. 11 is a schematic diagram of a model corresponding to the rolling bearing in Fig. 1 and used in a first parameter calculating step in Example 5.

Fig. 12 is an equivalent circuit in which each of components of a rolling bearing in Fig. 11 is assumed as an electrical element.

Fig. 13 is a schematic diagram of a model corresponding to the rolling bearing in Fig. 1 and used in a first parameter calculating step in Example 6.

Fig. 14 is an equivalent circuit in which each of components of a rolling bearing in Fig. 13 is assumed as an electrical element.

DESCRIPTION OF EMBODIMENTS

(Configurations of Rolling Bearing 10 and Electric Motor 100)

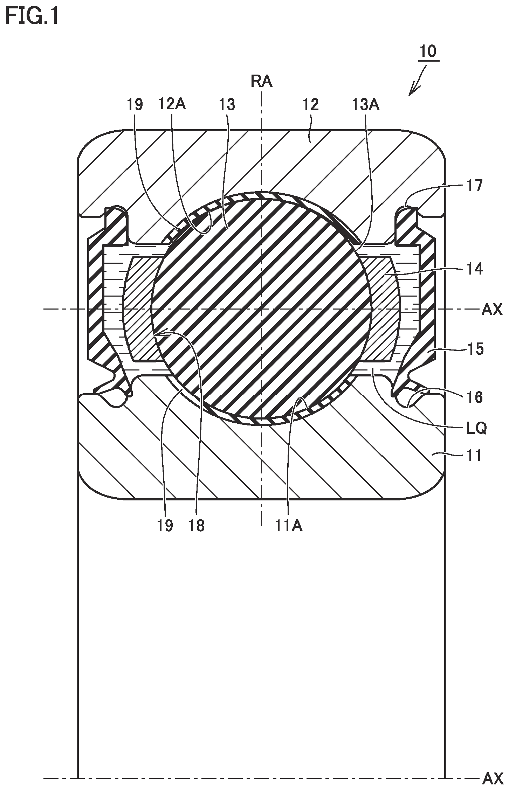

Fig. 1 is a schematic cross-sectional view showing a configuration of a rolling bearing according to the present embodiment. Referring to Fig. 1, a rolling bearing 10 according to the present embodiment is, for example, a deep groove ball bearing. However, the present invention is not limited thereto, but rolling bearing 10 may be a bearing having a rolling element, other than the deep groove ball bearing. Rolling bearing 10 mainly includes an inner ring 11, an outer ring 12, a plurality of rolling elements 13, a cage 14, and a seal member 15. Rolling bearing 10 is used, for example, in an industrial motor.

Inner ring 11 has an inner ring rolling contact surface 11A (a first rolling contact surface) having an annular shape. Outer ring 12 is disposed on the outer circumferential side of inner ring 11 at a distance from outer ring 12 (in a radial direction RA). Outer ring 12 has an outer ring rolling contact surface 12A (a first rolling contact surface) having an annular shape. The plurality of rolling elements 13 are spherical members rollably disposed between inner ring 11 and outer ring 12. The plurality of rolling elements 13 each have a surface having a rolling contact surface 13A (a second rolling contact surface). Each rolling element 13 may be made of generally known stainless steel, but is preferably made of ceramic.

Inner ring 11, outer ring 12, and rolling element 13 are bearing components, and inner ring rolling contact surface 11A, outer ring rolling contact surface 12A, and rolling contact surface 13A are contact surfaces of the respective bearing components. Rolling element 13 has rolling contact surface 13A and comes into contact, along rolling contact surface 13A, with each of outer ring rolling contact surface 11A and inner ring rolling contact surface 12A. The plurality of rolling elements 13 are spaced apart by annular cage 14 from each other in the circumferential direction, and thus are held on an annular raceway so as to be rollable. Cage 14 is provided with a plurality of openings referred to as pockets 18, and one rolling element 13 is accommodated in each of the plurality of pockets 18. Thereby, the plurality of rolling elements 13 are held at intervals in the circumferential direction of the annular shape of inner ring 11 and the like.

With the configuration as described above, inner ring 11 and outer ring 12 of rolling bearing 10 are rotatable relative to each other. In other words, inner ring 11 and outer ring 12 rotate about a central axis indicated by a one-dot chain line extending in the left-right direction in Fig. 1. The direction in which the central axis extends is defined as an axial direction AX. Further, the diameters of annular inner ring 11 and annular outer ring 12 extend in a direction that is indicated by a one-dot chain line extending in the up-down direction in Fig. 1 and that is defined as a radial direction RA. A position of the bearing component such as inner ring 11 in radial direction RA is located at a distance from the central axis indicating axial direction AX.

Inner ring 11 is provided with a first seal groove 16. First seal groove 16 is formed at each of both end portions (left and right end portions) of the outer circumferential surface (the outer diameter surface) of inner ring 11 in axial direction AX. Outer ring 12 is provided with a second seal groove 17. Second seal groove 17 is formed at each of both end portions (left and right end portions) of the inner circumferential surface (the inner diameter surface) of outer ring 12 in axial direction AX.

Seal member 15 is disposed between inner ring 11 and outer ring 12 so as to close a gap portion sandwiched between inner ring 11 and outer ring 12. In other words, inner ring 11 is disposed at a distance from outer ring 12 in radial direction RA, so that a gap portion exists in a portion corresponding a distance between inner ring 11 and outer ring 12. From the viewpoint of preventing the members accommodated in the gap portion from being exposed to the outside of rolling bearing 10, seal member 15 is disposed at each of both end portions of the gap portion in axial direction AX. Seal member 15 is fitted to the inner diameter surface of outer ring 12, and disposed to be in contact with inner ring 11. Seal member 15 is preferably formed of an electrically conductive rubber material.

In rolling bearing 10 of the present embodiment, a lubricant LQ is enclosed in the gap portion formed between inner ring 11 and outer ring 12, and the plurality of rolling elements 13 are disposed in the gap portion. The value of an oil film parameter A for lubricant LQ is preferably 3 or less. Lubricant LQ is preferably grease.

In rolling bearing 10 of the present embodiment, an F value calculated from the following formula:

$$F = f(\alpha, \beta, \gamma, \delta) \ldots (1)$$

(hereinafter referred to as a first mathematical formula), satisfies the following formula:

$$F \leq 10 \ldots (2)$$

(hereinafter referred to as a second mathematical formula). In this case, the first mathematical formula shows that F is a function of parameters $\alpha$, $\beta$, $\gamma$, and $\delta$. The second mathematical formula shows that, for rolling bearing 10 in the present embodiment, the F value obtained by inputting the numerical values of parameters $\alpha$, $\beta$, $\gamma$, and $\delta$ to the first mathematical formula is preferably 10 or less.

In the first mathematical formula, $\alpha$ denotes a mechanical parameter. Mechanical parameter $\alpha$ shows a value calculated by: the number of rotations of each of inner ring 11 and outer ring 12; the load applied to rolling bearing 10; the surface roughness of each of inner ring 11 and outer ring 12 included in rolling bearing 10; and bearing internal specifications. The bearing internal specifications mean the type (excluding materials) based on: 1) the materials and dimensions of inner ring 11 and outer ring 12 of rolling bearing 10; and 2) the number, shape, and dimensions of rolling elements 13. It is considered herein that each parameter obtained from the number of rotations of each of inner ring 11 and outer ring 12 and the load applied to rolling bearing 10 is included not in the mechanical parameter but in "parameter $\delta$ obtained from the use conditions" described later. This is because the number of rotations and the load are values that are input on site by the user of rolling bearing 10.

For example, at a high number of rotations of each of inner ring 11 and outer ring 12 of rolling bearing 10, the oil film of lubricant LQ becomes thicker, and dielectric breakdown occurs in the oil film at a higher voltage. Thus, the dielectric breakdown voltage of the oil film is high, so that dielectric breakdown is less likely to occur, but a larger discharge crater occurs in inner ring rolling contact surface 11A or the like once dielectric breakdown occurs in the oil film between inner ring 11 or the like and rolling element 13. The damage caused by discharge is hereinafter referred to as a discharge crater. In this case, a ridge mark is highly likely to be formed. In other words, the value of $\alpha$ is calculated such that the F value in the first mathematical formula becomes larger, for example, so as to exceed 10. When the load of rolling bearing 10 is high, for example, the oil film of lubricant LQ between rolling elements 13 and inner ring 11 and outer ring 12 becomes thinner, and thus, the dielectric breakdown voltage occurs at a lower voltage. This leads to a smaller discharge crater formed in inner ring rolling contact surface 11A or the like when discharge occurs in the oil film. Thus, dielectric breakdown is more likely to occur in the oil film, but even if dielectric breakdown occurs, a ridge mark is less likely to be formed. In other words, the value of $\alpha$ is calculated such that the F value in the first mathematical formula becomes smaller, for example, to be equal to or less than 10 as in the second mathematical formula. As described above, $\alpha$ is calculated from the values of: the number of rotations of inner ring 11 and the like; the load applied to inner ring 11 and the like; and the surface roughness of inner ring 11 and the like, and then, the calculated $\alpha$ is substituted into the first mathematical formula to thereby obtain the F value.

In the first mathematical formula, $\beta$ denotes a parameter for lubricant LQ. Parameter $\beta$ for lubricant LQ is a value calculated by the volume resistivity, the viscosity, the dielectric constant, and the dielectric breakdown strength of lubricant LQ. For example, in the case of lubricant LQ having a large volume resistivity, dielectric breakdown is less likely to occur in the oil film between inner ring 11 or the like and rolling elements 13. In this case, dielectric breakdown occurs in the oil film at a higher voltage. This leads to a larger discharge crater formed in inner ring rolling contact surface 11A or the like when dielectric breakdown occurs in the oil film between inner ring 11 or the like and rolling element 13. Thus, a ridge mark is highly likely to be formed. In other words, the value of $\beta$ is calculated such that the F value in the first mathematical formula becomes larger, for example, so as to exceed 10. In the case of lubricant LQ having a high viscosity, the oil film between inner ring 11 or the like and rolling elements 13 becomes thicker, and the dielectric breakdown voltage occurs at a higher voltage. Thus, the value of $\beta$ is obtained such that the discharge crater becomes larger and the F value in the first mathematical formula becomes larger, similarly to the above.

In the first mathematical formula, $\gamma$ denotes a constant for (other) parameters other than $\alpha$ and $\beta$ for rolling bearing 10 as an object. Further, $\gamma$ denotes a parameter related to the effect of suppressing electrolytic corrosion in rolling bearing 10, which is particularly a functional effect of the present embodiment. The value of $\gamma$ in a standard bearing not having a feature as being provided in the present embodiment (hereinafter referred to as a standard bearing) is 1. On the other hand, the value of $\gamma$ becomes smaller and reaches 0 at minimum as there are a larger number of effects for reducing electrolytic corrosion such as effects of: providing an insulation coating 19 on inner ring rolling contact surface 11A and outer ring rolling contact surface 12A; providing an electric motor 100 (described later) with an electrically conductive brush; configuring seal member 15 to have electrical conductivity; and the like. This results in a numerical value range of $0 \leq \gamma \leq 1$. When electrolytic corrosion can be completely eliminated, $\gamma$ has a value of 0. For example, in what is called a hybrid bearing including rolling elements 13 each made of ceramic, the possibility of electrolytic corrosion is completely eliminated, so that $\gamma$ has a value of 0.

Insulation coating 19 is an electrically insulating thin film formed by a surface treatment such as plating, coating, or paint application on inner ring rolling contact surface 1 1A and outer ring rolling contact surface 12A. Insulation coating 19 may be, for example, a synthetic resin layer or a coating layer formed by applying a paint. Alternatively, insulation coating 19 may not correspond to any of the above. In any case, it is preferable to appropriately select the material of insulation coating 19 for rolling bearing 10 such that the second mathematical formula is satisfied when parameter $\gamma$ is substituted into the first mathematical formula. Insulation coating 19 acts as a capacitor, and, if the capacitor has a smaller capacitance and rolling bearing 10 receives an AC voltage at a lower frequency, the F value in the first mathematical formula becomes smaller.

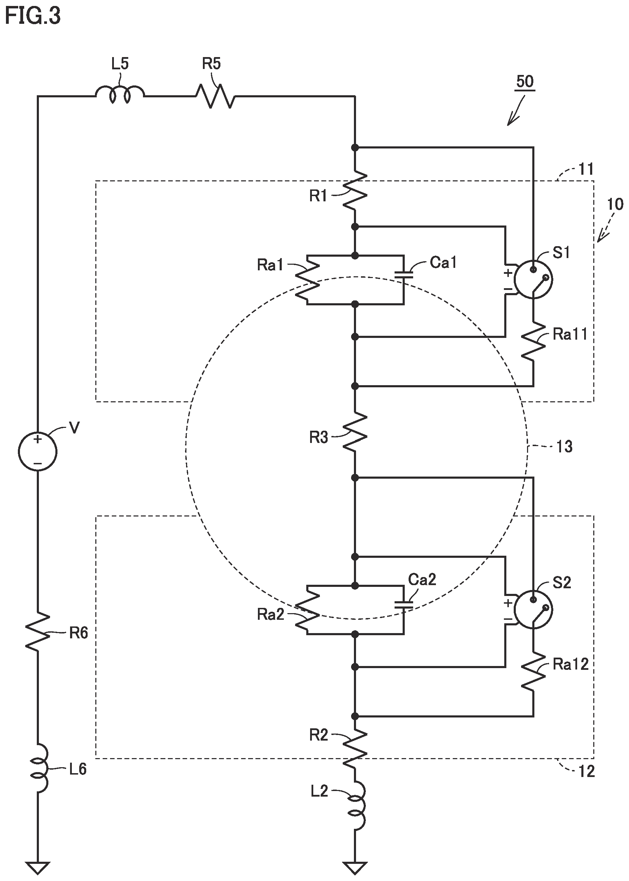

In the first mathematical formula, $\delta$ is a parameter obtained from the use conditions input by the user when using rolling bearing 10. The use conditions include an electrical parameter and the like. The electrical parameter is a value calculated based on the AC voltage applied to rolling bearing 10 when used by the user and the frequency of this AC voltage. The AC voltage shows a value of the voltage assumed to be applied when the user uses rolling bearing 10. The frequency may be considered to be at least the value of the "frequency" assumed to be applied when the user uses rolling bearing 10. As will be described later, the use conditions for the user such as the electrical parameter and the number of rotations adopted by the user are converted into parameter $\delta$ obtained from the use conditions by calculation on a personal computer adopting an imaginary electric circuit 50 (see Fig. 3) created on the personal computer.

As described above, among the above-mentioned parameters $\alpha$, $\beta$, $\gamma$, and $\delta$, only $\delta$ is a parameter controlled by the user of rolling bearing 10, and other parameters $\alpha$, $\beta$, and $\gamma$ are parameters that can be determined as design values during manufacturing of rolling bearing 10 by the manufacturer.

For example, if a high voltage is applied to rolling bearing 10, dielectric breakdown easily occurs even under a condition on which dielectric breakdown is normally less likely to occur due to a high dielectric breakdown voltage, such as a condition that the oil film between rolling element 13 and inner ring 11 and the like is thick, and a condition that the volume resistivity of lubricant LQ is high. Further, under the condition that the oil film is thick or the volume resistivity of lubricant LQ is high, a larger discharge crater is formed. Thus, under the condition that a high voltage is applied to rolling bearing 10, discharge craters may be larger depending on the conditions of mechanical parameter $\alpha$ and parameter $\beta$ for the lubricant. On the other hand, when a low voltage is applied to rolling bearing 10, contrary to the above, the dielectric breakdown voltage of lubricant LQ may not be reached, and discharge craters may not be formed. Therefore, the voltage applied to rolling bearing 10 has a larger influence on a high possibility of generation of ridge marks depending on the size of the discharge crater than by the conditions such as the thickness of the oil film related to mechanical parameter $\alpha$ and the volume resistivity of lubricant LQ related to parameter $\beta$ for the lubricant. Such a high possibility of generation of the ridge marks depending on the size of the discharge crater is reflected in the magnitude of the F value in the first mathematical formula depending on the electrical parameter.

In addition, the use conditions for the user include the number of rotations of each of inner ring 11 and outer ring 12, and the load applied to rolling bearing 10. The number of rotations is the number of rotations of each of inner ring 11 and outer ring 12 that is assumed when the user uses rolling bearing 10. The load is a force assumed to be applied to rolling bearing 10 when the user uses rolling bearing 10.

For example, when the user uses rolling bearing 10 adopted in an industrial motor, the number of rotations of rolling bearing 10 is 100 rpm or more and 20000 rpm or less. When the user uses rolling bearing 10 adopted in an industrial motor, the voltage applied to rolling bearing 10 is 2 V or more and 100 V or less. The values of the number of rotations and the voltage are determined by the user, and based on the values, parameter $\delta$ in the first mathematical formula is obtained.

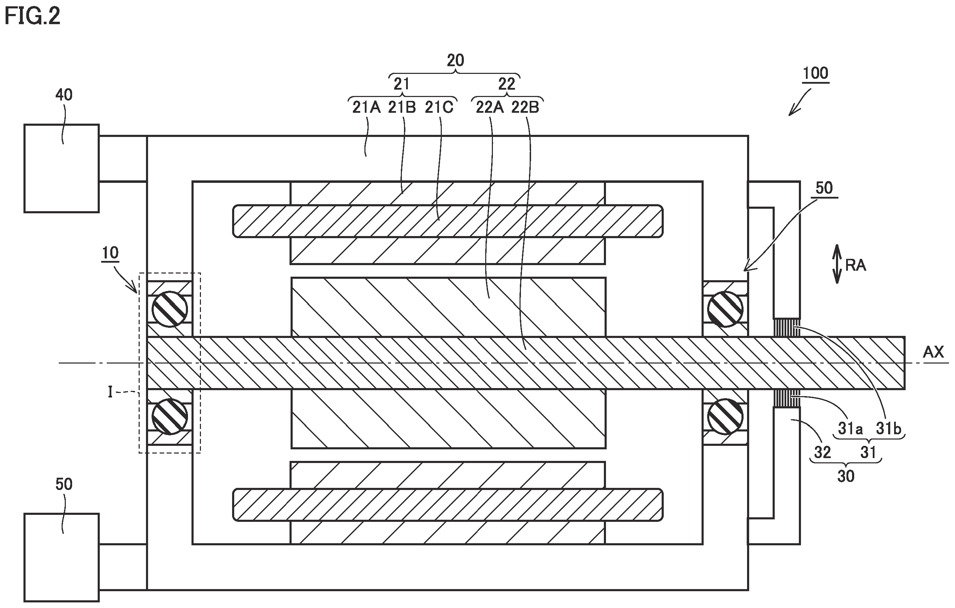

Fig. 2 is a schematic cross-sectional view showing a configuration of an electric motor including the rolling bearing in Fig. 1 according to the present embodiment. Referring to Fig. 2, electric motor 100 according to the present embodiment mainly includes a stator 21, a rotor 22, and an electrically conductive brush 30 in addition to rolling bearing 10 described above.

Stator 21 includes a stator yoke 21A, a stator core 21B, and a stator coil 21C. Stator yoke 21A is a member disposed on the outermost circumferential side of the entire electric motor 100 in radial direction RA so as to draw a circumferential shape. Stator core 21B is a portion extending inward in radial direction RA from the inner circumferential surface of stator yoke 21A in radial direction RA. Stator core 21B is formed integrally with stator yoke 21A. Stator core 21B is a portion as a core of the entire stator 21. A plurality of stator cores 21B are arranged at intervals in the circumferential direction extending in the direction facing away from the viewer of Fig. 1. Any number of stator cores 21B may be arranged, and the number thereof may be any of 2, 4, 6, 8, and 12, for example. Stator coil 21C is wound around the surface of stator core 21B. Stator coil 21C is wound around stator core 21B, and an AC current flows through stator coil 21C. Thereby, stator 21 (particularly, stator core 21B and stator coil 21C) functions as an electromagnet.

Rotor 22 is disposed inside stator 21 in radial direction RA. Rotor 22 includes a permanent magnet 22A and a shaft 22B. Shaft 22B is a rotation shaft of electric motor 100 that extends along axial direction AX in a central portion of the entire electric motor 100 in radial direction RA. A plurality of permanent magnets 22A are arranged at intervals in the circumferential direction. Any number of permanent magnets 22A may be arranged, and the number thereof may be any of 2, 4, 6, 8, and 12, for example. Permanent magnet 22A interacts with the electromagnet formed of stator core 21B and stator coil 21C to cause the entire rotor 22 to rotate about shaft 22B.

In electric motor 100, rolling bearing 10 is disposed between stator 21 and rotor 22. More specifically, shaft 22B of rotor 22 is fitted to inner ring 11 of rolling bearing 10. Thus, inner ring 11 is fixed to shaft 22B. This allows inner ring 11 to be rotatable together with rotor 22. Further, outer ring 12 of rolling bearing 10 is fitted to an inner wall surface of stator yoke 21A of stator 21. Thus, outer ring 12 is fixed to stator 21. Thereby, outer ring 12 is stationary at all times without rotating.

Electrically conductive brush 30 is a member that supplies electric power to stator 21. Electrically conductive brush 30 includes a brush 31 and a fixing portion 32. Brush 31 includes a positive-side brush 31a and a negative-side brush 31b. Positive-side brush 31a and negative-side brush 31b are in contact with shaft 22B. Fixing portion 32 fixes brush 31 to stator yoke 21A.

In addition to the above, electric motor 100 preferably includes an inverter device 40. Inverter device 40 controls, for example, the number of rotations of rotor 22 included in electric motor 100. By controlling the number of rotations of rotor 22, the electric power consumed by the entire electric motor 100 including rotor 22 can be reduced.

Fig. 3 is an equivalent circuit in which each of the components of the rolling bearing is assumed as an electrical element. Referring to Fig. 3, each of members such as inner ring 11 constituting rolling bearing 10 is assumed as an element, and thereby, imaginary electric circuit 50 can be created, for example, on a computer. Electric circuit 50 is assembled on a computer according to the design values (bearing internal specifications) of the members of rolling bearing 10 in the present embodiment. From the viewpoint of easy imagination thereof, Fig. 3 shows rolling bearing 10 indicated by dotted lines so as to overlap with the elements constituting electric circuit 50.

In imaginary electric circuit 50, a resistive component R1 of inner ring 11 is connected in series to a resistive component R2 of outer ring 12 and an inductive component L2 of a housing or the like of electric motor 100, in which each of the members is assumed as an "element" described above. Between them, a first parallel connection portion of a resistive component Ra1 and a capacitive component Ca1, a resistive component R3 of rolling element 13, and a second parallel connection portion of a resistive component Ra2 and a capacitive component Ca2 are connected in series.

In the first parallel connection portion, resistive component Ra1 is an electrical resistance by lubricant LQ between inner ring 11 and rolling element 13. Capacitive component Ca1 is an electrical capacitance by lubricant LQ between inner ring 11 and rolling element 13. A switch S1 is connected in parallel with the first parallel connection portion. Switch S1 is turned on when the voltage applied to lubricant LQ between inner ring 11 and rolling element 13 exceeds a certain value (the dielectric breakdown voltage). Switch S1 includes a resistive component Ra11 of lubricant LQ at the time of dielectric breakdown.

In the second parallel connection portion, resistive component Ra2 is an electrical resistance by lubricant LQ between outer ring 12 and rolling element 13. Capacitive component Ca2 is an electrical capacitance by lubricant LQ between outer ring 12 and rolling element 13. A switch S2 is connected in parallel with the second parallel connection portion. Switch S2 is turned on when the voltage applied to lubricant LQ between outer ring 12 and rolling element 13 exceeds a certain value (the dielectric breakdown voltage). Switch S2 includes a resistive component Ra12 of lubricant LQ at the time of dielectric breakdown.

An AC voltage V to rolling bearing 10 is applied to resistive component R1. In other words, a potential V is applied to rolling bearing 10 with respect to the ground potential. However, as shown in Fig. 3, between the ground potential and resistive component R1, an inductive component L5 and a resistive component R5 of shaft 22B and the like exist in series, and an inductive component L6 and a resistive component R6 outside rolling bearing 10 also exist in series.

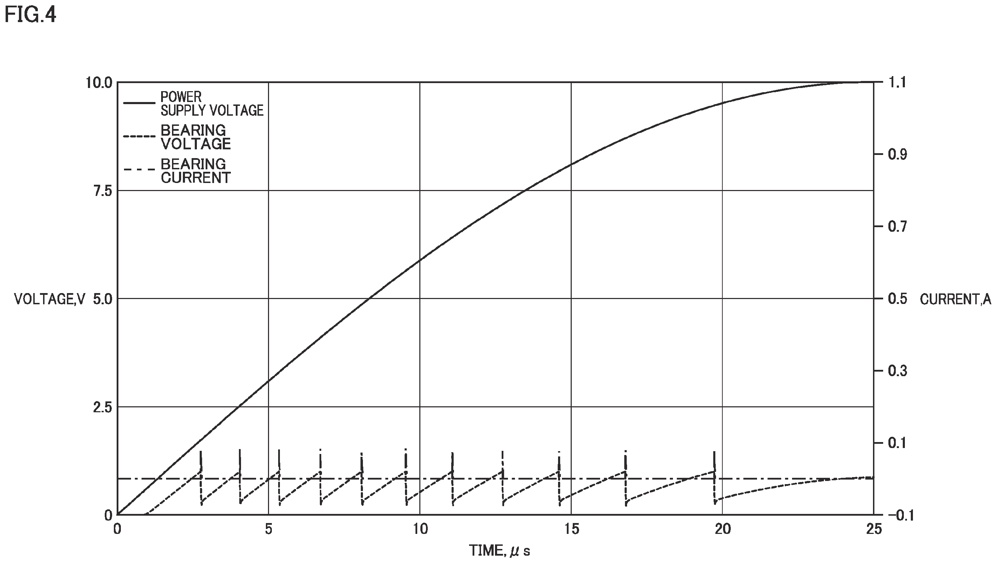

Fig. 4 is a graph showing an example of a result of a simulation performed using an electric circuit in Fig. 3. Referring to Fig. 4, a voltage is applied to imaginary electric circuit 50 shown in Fig. 3 to flow therethrough, imaginary electric circuit 50 being created on a computer in accordance with the bearing internal specifications and the like of rolling bearing 10. For example, the voltage applied to electric circuit 50 by the user is shown as a "power supply voltage" in the graph. This value corresponds to the applied voltage "V" in Fig. 3. The value of the current flowing through each element (resistive component Ra12 or resistive component Ra11) and flowing through electric circuit 50 at this time is shown as a "bearing current" in the graph. The value of the voltage applied to electric circuit 50 at this time is shown as a "bearing voltage" in the graph. Thereby, the values of the current and the voltage flowing through each element in Fig. 3 are calculated. These values are indicated as a "bearing voltage" and a "bearing current" in Fig. 4. The "bearing voltage" and the "bearing current" are output values obtained through calculation by inputting the use conditions for the user to electric circuit 50.

In Fig. 2, inverter device 40 is merely shown as being connected to electric motor 100 from the viewpoint of schematic illustration showing that inverter device 40 is electrically connected to electric motor 100 to be capable of controlling electric motor 100. In other words, the configuration in Fig. 1 in which inverter device 40 is connected to electric motor 100 does not necessarily show the configuration of the actual outer appearance. The same also applies to electric circuit 50 in Fig. 3. In Fig. 2, electric circuit 50 is merely denoted by the reference character in the same manner as an arrow indicating rolling bearing 10 in order to schematically show that this electric circuit 50 is an equivalent circuit of rolling bearing 10 in electric motor 100.

(Method of Designing Rolling Bearing 10)

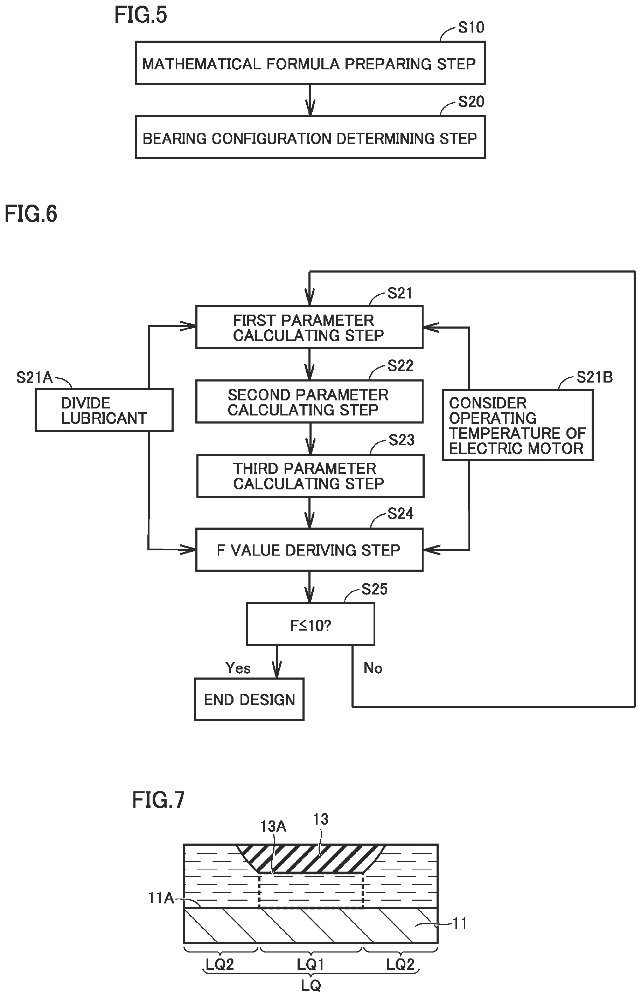

Fig. 5 is a flowchart showing an overview of a method of designing a rolling bearing according to the present embodiment. Referring to Fig. 5, a mathematical formula preparing step (S10) is first performed. Specifically, a mathematical formula is prepared that allows a decision to be made as to whether or not suppression of electrolytic corrosion in rolling bearing 10 is enabled, rolling bearing 10 including inner ring 11, outer ring 12, the plurality of rolling elements 13 between inner ring 11 and outer ring 12, and lubricant LQ. This mathematical formula is expressed, for example, as

$$F = f(\alpha, \beta, \gamma, \delta) \dots (1)$$

mentioned above.

Then, the configurations of inner ring 11, outer ring 12, and the plurality of rolling elements 13 are determined based on the conditions (the number of rotations, the load, the AC voltage, and the like) obtained in advance and input by the user during use of rolling bearing 10 (S20). This will be described below in detail.

Fig. 6 is a flowchart showing an overview of a rolling bearing configuration determining step (S20) in the method of designing the rolling bearing according to the present embodiment. Referring to Fig. 6, the determining step (S20) that is, for example, one step of the designing method in Fig. 5 further includes a first parameter calculating step (S21) of obtaining parameter β for lubricant LQ. In other words, in the determining step (S20), the type and the like of lubricant LQ to be used are also determined. At this time, the lubricant is divided (S21A) and the operating temperature of the electric motor is considered (S21B). Next, specific details thereof will be described.

Fig. 7 is a schematic diagram showing a model for calculating a parameter for the lubricant. In Fig. 7, for convenience of explanation, the distance between inner ring rolling contact surface 11A and rolling contact surface 13A is shown as being exaggeratedly wide. In order to show that rolling element 13 and inner ring 11 form a contact ellipse, the lower end of rolling element 13 and inner ring rolling contact surface 11A are shown as straight lines extending in the left-right direction. Referring to Fig. 7, in the first parameter calculating step (S21), for dividing a lubricant (S21A), lubricant LQ is divided into two regions of a first region LQ1 and a second region LQ2. First region LQ1 is a partial region of lubricant LQ that is located between inner ring rolling contact surface 11A and rolling contact surface 13A in a region in which one of inner ring rolling contact surface 11A and outer ring rolling contact surface 12A (inner ring rolling contact surface 11A in Fig. 7) contacts rolling contact surface 13A. First region LQ1 corresponds to a region of rolling element 13 that is closest to inner ring rolling contact surface 11A. First region LQ1 is a region of lubricant LQ that is located between rolling contact surface 13A and inner ring rolling contact surface 11A in a portion in which rolling contact surface 13A of rolling element 13 and inner ring rolling contact surface 11A approach each other to come into contact with each other in an elliptical shape, for example, due to their elastic forces. Second region LQ2 is a region of lubricant LQ on the inner ring 11 side other than first region LQ1. Second region LQ2 is a region, for example, around first region LQ1 in axial direction AX (see Figs. 1 and 2). Lubricant LQ is adjacent to both inner ring rolling contact surface 11A and rolling contact surface 13A in first region LQ1 as compared with second region LQ2. Pressure is applied to first region LQ1 since first region LQ1 is sandwiched between rolling element 13 and inner ring rolling contact surface 11A that are closer to each other as compared with second region LQ2. Considering that the volume resistivity, the viscosity, the dielectric constant, and the dielectric breakdown strength of the lubricant are different between first region LQ1 and second region LQ2 due to this pressure, each parameter β (the volume resistivity, the viscosity, the dielectric constant, and the dielectric breakdown strength) for lubricant LQ is calculated.

Further, in the case where the operating temperature of the electric motor is considered (S21B), each parameter β for lubricant LQ is calculated in consideration of changes in parameter β (the volume resistivity, the viscosity, the dielectric constant, and the dielectric breakdown strength) for lubricant LQ according to the operating temperature of rolling bearing 10 including lubricant LQ. Specifically, it has been found that, when the temperature of lubricant LQ falls from 30°C to 40°C, the dielectric breakdown voltage thereof rises by about three times to about five times, and thus, a large discharge crater is formed therearound. Thus, the F value according to the first mathematical formula can be accurately calculated by considering that the value of each parameter β such as the volume resistivity of lubricant LQ changes according to the temperature of lubricant LQ.

The configuration determining step (S20) further includes a second parameter calculating step (S22) of obtaining mechanical parameter α and constant γ for other parameters (parameters related to an effect of suppressing electrolytic corrosion in rolling bearing 10). The configuration determining step (S20) further includes a third parameter calculating step (S23) of obtaining parameter δ obtained from the use conditions. Further, the configuration determining step (S20) includes an F value calculating step (S24).

In the third parameter calculating step (S23), an output value is obtained through calculation by inputting the use conditions for the user to electric circuit 50. The output value is obtained as parameter δ obtained from the use conditions.

Electric circuit 50 is an imaginary circuit that is created on a personal computer or the like by assuming, as an element, a portion formed of inner ring 11, outer ring 12, rolling elements 13, and lubricant LQ that constitute rolling bearing 10. Electric circuit 50 may include members (such as insulation coating 19 and the like related to parameter y) other than those described above and included in rolling bearing 10. Thereby, the calculation accuracy is further improved.

Mechanical parameter $\alpha$, parameter $\beta$ for the lubricant, and constant $\gamma$ for other parameters obtained in the first and second parameter calculating steps, and the use conditions for rolling bearing 10 by the user are input to electric circuit 50 (see Fig. 3). The use conditions for rolling bearing 10 by the user are, for example, the "power supply voltage" and the like in Fig. 4. Thereby, the "bearing voltage", the "bearing current", and the like shown in Fig. 4 are obtained as the "output values" from electric circuit 50. Based on the "bearing voltage", the "bearing current", and the like, parameter $\delta$ obtained from the use conditions is obtained. In other words, parameter $\delta$ obtained from the use conditions may be the output value itself from electric circuit 50, or may be a value obtained by further processing the output value.

In this case, the "number of rotations", the "load", the "AC voltage", the "frequency", and the like of rolling bearing 10, based on which $\delta$ among the above-mentioned parameters $\alpha$, $\beta$, $\gamma$, and $\delta$ is determined, do not indicate the feature of rolling bearing 10 as an object, but are the use conditions for the user in many cases. In other words, it is difficult for the manufacturer to change the values of the "number of rotations", the "load", and the "AC voltage". Thus, in the configuration determining step (S20), in accordance with the arbitrary numbers of rotations of inner ring 11 and outer ring 12 during use by the user, the load applied to inner ring 11 and outer ring 12, and the value of the voltage (the use condition) applied to rolling bearing 10, it is decided whether or not the values other than the above, i.e., the values of mechanical parameter $\alpha$ such as the shape, the dimensions or the like of rolling bearing 10 as an object, parameter $\beta$ for the lubricant, and constant $\gamma$ for other parameters (for electrically conductive brush 30 or the like) for suppressing electrolytic corrosion satisfy the second mathematical formula (S25). In other words, the F value is calculated by substituting mechanical parameter $\alpha$, parameter $\beta$ for the lubricant, constant $\gamma$ for other parameters, and parameter $\delta$ obtained from the use conditions into the first mathematical formula (S24). It is decided whether or not the F value is 10 or less (S25).

When the second mathematical formula is not satisfied as a result of performing the step (S25), the step (S20), i.e., the steps (S21) to (S25), is repeated while changing parameters $\alpha$, $\beta$, and $\gamma$ until the second mathematical formula is satisfied. The values of parameters $\alpha$, $\beta$, and $\gamma$ are determined by the values of parameters $\alpha$, $\beta$, and $\gamma$ obtained when the second mathematical formula is satisfied in the step (S25). Consequently, the bearing internal specifications such as the types and the dimensions of inner ring 11, outer ring 12, rolling elements 13, and lubricant LQ of rolling bearing 10 are selected. Further, it is also determined, for example, whether or not insulation coating 19 related to parameter $\gamma$ for rolling bearing 10 exists. Through the above-mentioned procedure, rolling bearing 10 is designed such that the F value derived from the following formula:

$$F = f(\alpha, \beta, \gamma, \delta) \dots (1)$$

satisfies the following formula:

$$F \leq 10 \dots (2).$$

As described above, after the use conditions for the user at the delivery destination are grasped in advance, the bearing internal specifications that can be controlled during manufacturing of the bearing as an object are determined while considering the use conditions. According to the input conditions such as the number of rotations, the load, and the value of the voltage to be applied for rolling bearing 10 that are determined by the user, the types such as the size, the surface roughness, the shape, and the material of each of inner ring 11, outer ring 12, and rolling element 13 are selected, and the volume resistivity, the viscosity, the dielectric constant, the dielectric breakdown strength, and the like of lubricant LQ are determined. Further, the presence or absence of insulation coating 19 (see Fig. 1) on inner ring rolling contact surface 11A, outer ring rolling contact surface 12A and the like, and the materials and the like of electrically conductive brush 30 and seal member 15 are determined, each of which influences the value of $\delta$. Thereby, the F value in the first mathematical formula can be controlled so as to satisfy the second mathematical formula. Consequently, electrolytic corrosion in rolling bearing 10 and ridge marks caused thereby can be suppressed.

However, for example, if each rolling element 13 is made of ceramic for the purpose of changing parameter $\gamma$ related to the effect of suppressing electrolytic corrosion, generation of ridge marks can be suppressed, but the cost increases steeply. Thus, it is preferable to satisfy the second mathematical formula by changing the bearing internal specifications, i.e., 1) the dimensions and the materials of inner ring 11 and outer ring 12, and 2) the type (excluding the material) of rolling element 13 or the type of lubricant LQ. In this way, the effect of suppressing ridge marks can be achieved at the same level as that in the case of rolling element 13 made of ceramic and at a lower cost than that in the case where each rolling element 13 is changed. This will be described again in Examples below. Thus, as a procedure, it is preferable to first examine whether or not the second mathematical formula is satisfied by changing the bearing internal specifications and the lubricant, and if the second mathematical formula is still not satisfied, to examine changing of constant $\gamma$ for other parameters for suppressing electrolytic corrosion. As described above, it is determined how to manufacture rolling bearing 10 in the above-described embodiment.

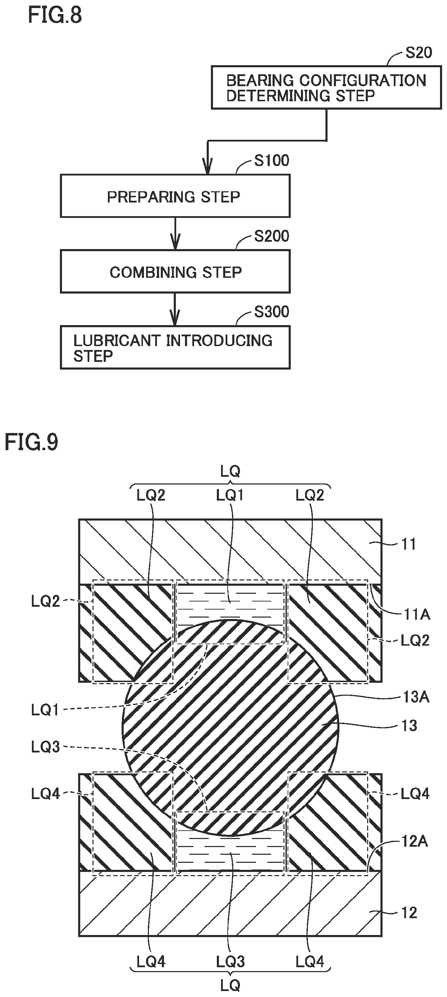

When the values of parameters $\alpha$, $\beta$, and $\gamma$ are determined according to parameter $\delta$ based on the above-described designing method, the members such as inner ring 11, outer ring 12, rolling elements 13, and lubricant LQ constituting rolling bearing 10 are actually formed. Thereafter, rolling bearing 10 is manufactured. Fig. 8 is a flowchart showing an overview of a method of manufacturing the rolling bearing according to the present embodiment. Referring to Fig. 8, inner ring 11 of rolling bearing 10 such as a deep groove ball bearing shown in Fig. 1, outer ring 12 disposed on the outer circumferential side thereof, and a plurality of rolling elements 13 rollably disposed between inner ring 11 and outer ring 12 are prepared (S100). More specifically, the method includes a forming step, a heat treatment step, a finishing step, and the like for forming the shape of each member, but the detailed description will not be made. In addition, the members such as cage 14 and seal member 15 necessary for completing rolling bearing 10 in Fig. 1 are prepared, and lubricant LQ is also prepared.

In order to form insulation coating 19 on inner ring rolling contact surface 11A and outer ring rolling contact surface 12A, processing such as resin coating or injection molding is performed. In order to form seal member 15, processing such as die molding is performed.

Then, a combining step (S200) is performed. Specifically, inner ring 11, outer ring 12, and the plurality of rolling elements 13 formed in the step (S100) are combined with cage 14, seal member 15, and the like that are separately prepared. Further, lubricant LQ is enclosed in a gap portion formed between inner ring 11 and outer ring 12, the plurality of rolling elements 13 being disposed in the gap portion (S300). Lubricant LQ is supplied into the gap portion by a generally known introducing method.

In the preparing step (S100) in the method of manufacturing rolling bearing 10 as described above, by the configuration determining step (S20) as one step of the design performed in advance, inner ring 11, outer ring 12, the plurality of rolling elements 13, and lubricant LQ are prepared such that the F value derived from the first mathematical formula satisfies the second mathematical formula.

In other words, in the preparing step (S100), the F value is calculated (S24). This is a step of substituting the values of parameters $\alpha$, $\beta$, $\gamma$, and $\delta$ into the first mathematical formula and deriving the F value therefrom. At this time, particularly for parameter $\beta$ for lubricant LQ, the value obtained in consideration of the steps (S21A) and (S21B) is substituted into the first mathematical formula.

(Functions and Effects)

Rolling bearing 10 according to the present disclosure is used in a motor under inverter control. Rolling bearing 10 includes inner ring 11, outer ring 12, the plurality of rolling elements 13, and lubricant LQ. Outer ring 12 is disposed on the outer circumferential side of inner ring 11. The plurality of rolling elements 13 are rollably disposed between inner ring 11 and outer ring 12. Lubricant LQ is enclosed in a gap portion formed between inner ring 11 and outer ring 12, the plurality of rolling elements 13 being disposed in the gap portion. For example, when rolling bearing 10 is used in an industrial motor, the number of rotations during use of rolling bearing 10 is 100 rpm or more and 20000 rpm or less. The voltage applied during use of rolling bearing 10 is 2 V or more and 100 V or less. Assuming that $\alpha$ denotes the mechanical parameter, $\beta$ denotes the parameter for the lubricant, $\gamma$ denotes the constant for other parameters, and $\delta$ denotes the parameter obtained from the use conditions, then, the F value calculated from the following first mathematical formula:

$$F = f(\alpha, \beta, \gamma, \delta) \ ... \ (1)$$

satisfies the following second mathematical formula:

$$F \leq 10 \ ... \ (2).$$

An oil film by lubricant LQ is formed between: rolling elements 13; and inner ring 11 and outer ring 12 (the bearing rings) of rolling bearing 10 used in the motor under inverter control. The oil film may function as a capacitor component. When the voltage applied to the oil film exceeds the dielectric breakdown voltage of the oil film, discharge occurs between the bearing ring and the rolling element. This discharge may cause electrolytic corrosion inside rolling bearing 10. The size of the discharge crater caused by electrolytic corrosion serves as an index for deciding whether or not the damage causes a ridge mark. In the present embodiment, it was newly found that the size of the discharge crater varies depending on the above-mentioned parameters $\alpha$, $\beta$, $\gamma$, and $\delta$. It was found that, when the number of rotations during use of rolling bearing 10 by the user is 100 rpm or more and 20000 rpm or less, the voltage (the effective value of the AC voltage) applied during use is 2 V or more and 100 V or less, and the F value in the first mathematical formula that is a function of parameters $\alpha$, $\beta$, $\gamma$, and

$\delta$ is 10 or less, then, the discharge crater has a size equal to or less than a certain value, and thus, generation of a ridge mark can be suppressed. Under the condition that F ≤ 10, the size of the discharge crater generated in rolling bearing 10 can be equal to or less than an allowable maximum value. Therefore, even when rolling bearing 10 is used under the condition on which electrolytic corrosion occurs in the case of a normal bearing, generation of a ridge mark can be suppressed.

In rolling bearing 10 described above, the value of oil film parameter A for lubricant LQ may be 3 or less. This results in a thinner oil film, so that dielectric breakdown occurs in the oil film at a lower voltage. Thus, even if dielectric breakdown occurs in the oil film, a discharge crater is still small. Therefore, a ridge mark is less likely to be formed. Further, if the value of A is 3 or less, the torques of a shaft 25 and rotor 22 to which rolling bearing 10 is attached can be reduced. However, the state in which the value of oil film parameter A is 3 or less is what is called a boundary lubrication state, in which state there is a concern about peeling started at a surface on the rolling contact surfaces of the bearing ring and the rolling elements. Thus, it is preferable to use lubricant LQ having an oil film parameter A having a value of 3 or less and capable of preventing, in advance, peeling started at the surface, or to use a bearing subjected to a surface treatment. In this way, even in the case of rolling bearing 10 adopting lubricant LQ having a value A equal to or less than 3 at which peeling essentially easily occurs, both the effect of preventing ridge marks caused by electrolytic corrosion and the effect of preventing peeling at the surface can be achieved. Therefore, the life of rolling bearing 10 can be sufficiently prolonged.

In rolling bearing 10, lubricant LQ may be grease. This makes it possible to achieve a condition of F ≤ 10 that is derived from the above-mentioned mathematical formula, and occurrence of ridge marks can be suppressed.

Rolling bearing 10 may further include seal member 15 fitted to the inner diameter surface of the outer ring and disposed to be in contact with the inner ring, and seal member 15 may be formed of an electrically conductive rubber material. Thereby, the effect of reducing electrolytic corrosion can be enhanced, so that occurrence of ridge marks can be suppressed.

Electric motor 100 according to the present disclosure includes stator 21 and rotor 22. Rotor 22 is disposed radially inside stator 21 and is rotatable. Rolling bearing 10 is disposed between stator 21 and rotor 22. Inverter device 40 capable of controlling the rotation of rotor 22 is connected to electric motor 100. Thereby, it is possible to provide electric motor 100 adopting rolling bearing 10 that is less likely to cause a failure resulting from a ridge mark even if rolling bearing 10 is used under the condition on which electrolytic corrosion occurs in the case of a normal bearing.

In the method of designing a rolling bearing according to the present disclosure, the first mathematical formula is prepared that allows a decision to be made as to whether or not suppression of electrolytic corrosion in rolling bearing 10 is enabled, rolling bearing 10 including: inner ring 11; outer ring 12 disposed on the outer circumferential side of inner ring 11; the plurality of rolling elements 13 rollably disposed between inner ring 11 and outer ring 12; and lubricant LQ (S10). The configurations of inner ring 11, outer ring 12, and the plurality of rolling elements 13 are determined based on the use conditions for rolling bearing 10 (S20). The first mathematical formula is expressed as:

$$F = f(\alpha, \beta, \gamma, \delta) \ \dots \ (1),$$

where $\alpha$ denotes the mechanical parameter for inner ring 11, outer ring 12, and the plurality of rolling elements 13, $\beta$ denotes the parameter for the lubricant, $\gamma$ denotes the constant for other parameters, and $\delta$ denotes the parameter obtained from the use conditions (by the user). The determining step (S20) includes a step of deciding whether or not the second mathematical formula is satisfied according to the use conditions, the second mathematical formula being expressed as:

$$F \leq 10 \ \dots \ (2).$$

Parameter $\delta$ obtained from the use conditions is a simulation value such as a bearing current calculated based on the use conditions (the applied voltage and the like) for the user. In this way, rolling bearing 10 can be designed such that electrolytic corrosion and ridge marks are less likely to occur. In this way, it is also possible to evaluate, depending on the F value, whether or not the designed rolling bearing 10 is more likely to cause electrolytic corrosion and ridge marks. Thus, it is possible to prevent provision of a conventional overdesigned rolling bearing 10 relying on empirical instincts (rolling bearing 10 that is more likely to cause a ridge mark caused by electrolytic corrosion).

In the method of designing a rolling bearing, the determining step (S20) includes a first parameter calculating step (S21) of obtaining parameter $\beta$ for the lubricant. In the first parameter calculating step (S21), lubricant LQ is divided into first region LQ1 of lubricant LQ and second region LQ2 of lubricant LQ in a region in which first rolling contact surfaces 11A, 12A and second rolling contact surface 13A approach each other to form an ellipse, first region LQ1 being located between first rolling contact surfaces 11A, 12A and second rolling contact surface 13A, second region LQ2 being other than first region LQ1 in the region, first rolling contact surfaces 11A, 12A each being a rolling contact surface of at least one of inner ring 11 and outer ring 12, and second rolling contact surface 13A being a rolling contact surface of rolling element 13. Parameter $\beta$ for the lubricant is calculated, considering that the volume resistivity, the viscosity, the dielectric constant, and the dielectric breakdown strength are different between first region LQ1 and second region LQ2 due to the pressure. In this way, a more accurate result can be obtained, and a more appropriate and lower-cost bearing can be provided.

In other words, the method of designing a rolling bearing according to the present embodiment may have the following features, as will be specifically described later in Example 4 and subsequent Examples. In the method of designing a rolling bearing according to the present disclosure, the first mathematical formula is prepared that allows a decision to be made as to whether or not suppression of electrolytic corrosion in rolling bearing 10 is enabled, rolling bearing 10 including: inner ring 11; outer ring 12 disposed on the outer circumferential side of inner ring 11; the plurality of rolling elements 13 rollably disposed between inner ring 11 and outer ring 12; and lubricant LQ (S10). The configurations of inner ring 11, outer ring 12, and the plurality of rolling elements 13 are determined based on the use conditions for rolling bearing 10 (S20). The first mathematical formula is expressed as:

$$F = f(\alpha, \beta, \gamma, \delta) \dots (1),$$

where $\alpha$ denotes the mechanical parameter for inner ring 11, outer ring 12, and the plurality of rolling elements 13, $\beta$ denotes the parameter for the lubricant, $\gamma$ denotes the constant for other parameters, and $\delta$ denotes the parameter obtained from the use conditions (by the user). The determining step (S20) includes a step of deciding whether or not the second mathematical formula is satisfied according to the use conditions, the second mathematical formula being expressed as:

$$F \leq 10 \dots (2).$$

The determining step (S20) includes a first parameter calculating step (S21) of obtaining parameter $\beta$ for the lubricant. In the first parameter calculating step (S21), lubricant LQ is divided into first region LQ1 of lubricant LQ and second region LQ2 of lubricant LQ in a region in which first rolling contact surfaces 11A, 12A and second rolling contact surface 13A approach each other to form an ellipse, first region LQ1 being located between first rolling contact surfaces 11A, 12A and second rolling contact surface 13A, second region LQ2 being other than first region LQ1 in the region, first rolling contact surfaces 11A, 12A each being a rolling contact surface of at least one of inner ring 11 and outer ring 12, second rolling contact surface 13A being a rolling contact surface of rolling element 13. A characteristic value of an imaginary element assumed for first region LQ1 and second region LQ2 in imaginary electric circuit 50 corresponding to rolling bearing 10 is obtained. In this way, a more accurate result can be obtained, and a more appropriate and lower-cost bearing can be provided. In other words, since parameter $\beta$ for lubricant LQ can be obtained with higher accuracy, rolling bearing 10 capable of more reliably suppressing a ridge mark caused by electrolytic corrosion can be provided.

In the method of designing a rolling bearing, in the first parameter calculating step (S21), parameter $\beta$ for the lubricant is calculated in consideration of changes in volume resistivity, viscosity, dielectric constant, and dielectric breakdown strength of the lubricant according to the operating temperature of rolling bearing 10 (electric motor 100) including lubricant LQ. In this way, a more accurate result can be obtained, and a more appropriate and lower-cost bearing can be provided.

In the method of designing a rolling bearing, the determining step (S20) includes the second parameter calculating step (S22) of obtaining mechanical parameter $\alpha$ and constant $\gamma$ for other parameters. The determining step (S20) includes the third parameter calculating step (S23) of obtaining parameter $\delta$ obtained from the use conditions (by the user). The determining step (S20) further includes the step (S24) of calculating an F value obtained by the first mathematical formula from: mechanical parameter $\alpha$, parameter $\beta$ for the lubricant, and constant $\gamma$ for other parameters, which are obtained in the first parameter calculating step (S21) and the second parameter calculating step (S22); and parameter $\delta$ obtained from the use conditions, the first mathematical formula being expressed as

$$F = f(\alpha, \beta, \gamma, \delta) \dots (1).$$

In the third parameter calculating step (S23), parameter $\delta$ obtained from the use conditions is obtained based on an output value obtained through calculation by inputting the use conditions (by the user) to imaginary electric circuit 50 assembled by assuming, as an element, a portion formed of inner ring 11, outer ring 12, rolling elements 13, and lubricant LQ that constitute rolling bearing 10. In the step of calculating an F value (S24), mechanical parameter $\alpha$, parameter $\beta$ for the lubricant, constant $\gamma$ for other parameters, and parameter $\delta$ obtained from the use conditions are substituted into the first mathematical formula.

In this way, the design of rolling bearing 10 can be easily changed on the computer. Further, the F value in rolling bearing 10 whose design has been changed can be easily calculated. Further, the above-described designing method also allows for calculation of the F value at the time when the value of each element in the electric circuit has been changed. Thus, it is possible to propose to the user as to which rolling bearing 10 is appropriate to be used, for example, in consideration of the reduction rate of the F value in the case where the standard bearing (having no insulation coating 19) is replaced with an insulation coating bearing (having insulation coating 19) for the use conditions for rolling bearing 10 by the user. In other words, it is possible to propose, to each user, the design specifications of optimal and low-cost rolling bearing 10 for suppressing electrolytic corrosion and ridge marks caused thereby. Thereby, the design of rolling bearing 10 can be changed in a smaller scale without having to change the entire rolling bearing 10. Specifically, for example, rolling bearing 10 can be changed to a rolling bearing having an optimal bearing model number, or can be changed to a rolling bearing including an optimal type of lubricant LQ. Such a small-scale design change leads to a reduced cost. The parameter to be changed when making a small-scale change may be $\beta$, but is not limited thereto, and the parameter to be changed may be $\alpha$ for the bearing internal specifications, $\delta$ for the insulation coating, or the like.

In the method of designing a rolling bearing, the determining step (S20) is repeated until the second mathematical formula is satisfied by the deciding step (S25), the second mathematical formula being expressed as:

$$F \leq 10 \ ... \ (2).$$

Thereby, rolling bearing 10 capable of reliably suppressing electrolytic corrosion can be designed.

In the method of manufacturing a rolling bearing according to the present disclosure, inner ring 11, outer ring 12 disposed on the outer circumferential side of inner ring 11, the plurality of rolling elements 13 rollably disposed between inner ring 11 and outer ring 12, and lubricant LQ are prepared (S100). Inner ring 11, outer ring 12, and the plurality of rolling elements 13 are combined (S200). Lubricant LQ is enclosed in a gap portion formed between inner ring 11 and outer ring 12, the plurality of rolling elements 13 being disposed in the gap portion (S300). Inner ring 11, outer ring 12, the plurality of rolling elements 13, and lubricant LQ are prepared such that the F value derived from the following first mathematical formula:

$$F = f(\alpha, \beta, \gamma, \delta) \ ... \ (1),$$

satisfies the following second mathematical formula:

$$F \leq 10 \ ... \ (2),$$

where $\alpha$ denotes the mechanical parameter, $\beta$ denotes the parameter for the lubricant, $\gamma$ denotes the constant for other parameters, and $\delta$ denotes the parameter obtained from the use conditions for rolling bearing 10.

Under the condition that $F \leq 10$ that is derived from the above-mentioned mathematical formula, the size of the discharge crater generated in rolling bearing 10 can be equal to or less than an allowable maximum value. Therefore, it is possible to provide rolling bearing 10 capable of suppressing generation of a ridge mark even when this rolling bearing 10 is used under the condition on which electrolytic corrosion occurs in the case of a normal bearing.

In the method of manufacturing a rolling bearing, in the preparing step (S100), mechanical parameter $\alpha$, parameter $\beta$ for the lubricant, constant $\gamma$ for other parameters, and the types of inner ring 11, outer ring 12, and rolling elements 13 are selected according to the arbitrary number of rotations of each of inner ring 11 and outer ring 12, the load applied to inner ring 11 and outer ring 12, and the value of the voltage applied to rolling bearing 10 during use. Thereby, it is possible to manufacture and provide, for each user, optimal and lower-cost rolling bearing 10 having the above-described parameters and the optimal bearing internal specifications for suppressing occurrence of electrolytic corrosion and ridge marks caused thereby, in consideration of the conditions such as the number of rotations, the load, and the value of the applied voltage depending on the user.

Example 1

An examination was conducted by comparisons about the F values according to the first mathematical formula and about the presence or absence of a ridge mark, among the cases where a "standard bearing", a "hybrid bearing", and an "insulation coating bearing whose $\gamma$ value has been changed according to the present embodiment (hereinafter referred to as an insulation coating bearing)" were included as rolling bearing 10 included in a tester of electric motor 100 in Fig. 2. In other words, the evaluation item is the presence or absence of a ridge mark checked by observation of the rolling contact surface. Although the definitions of these bearings have already been described above, the "standard bearing" is a bearing as a comparative example not having insulation coating 19, including rolling elements 13 made of metal, and not having the feature of the present embodiment. The "hybrid bearing" is different from the standard bearing only in that rolling elements 13 are made of ceramic. The "insulation coating bearing" is different from the standard bearing only in that insulation coating 19 is provided on the rolling contact surface as in Fig. 1 to thereby change the value of $\gamma$. The evaluation conditions in the present example are shown in Table 1 below.

[Table 1]

Table 1

| Items | Details |
|---|---|
| Type of Bearing | 6206 |
| Current Flowing through Bearing (Unit: A) | 5.0 |
| Number of Rotations of Tester (Unit: Rotations per Minute) | 1600 |
| Radial Load (Unit: N) | 38.2 |
| Axial Load (Unit: N) | 101 |
| Test Time (Unit: Time) | 30 |
| Type of Lubricant | Oil |
| Number to be Tested | One for Each Bearing |
| Evaluation Items | Observation of Rolling Contact Surface |

Table 2 shows the results about the F values and the presence or absence of ridge marks in the respective bearings. The lubricant of the standard bearing in Table 2 is oil, and more specifically, the lubricant "oil" is DURASYN (registered trademark) 166 POLYALPHAOLEFINS.

[Table 2]

Table 2

| | Standard Bearing | Hybrid Bearing | Insulation Coating Bearing |
|---|---|---|---|
| Cost Level | - | High | Middle |
| F Value in Mathematical Formula 1 | 15 | 0 | 6 |
| Presence or Absence of Ridge Mark | Presence | Absence | Absence |

As shown in Table 2, in the case of the standard bearing, the F value exceeds 10, and the second mathematical formula is not satisfied. Consequently, ridge marks are generated. Regarding the conventional standard bearing having no feature of the present embodiment, the threshold value for the presence or absence of the ridge mark is unknown, and thus, it is uncertain in many cases as to how to achieve improvement. As shown in Table 2, if a large-scale countermeasure is taken by using a hybrid bearing, the F value can be 0, and ridge marks can be suppressed. Adopting a hybrid bearing is a costly method but allows for suppression of ridge marks most safely, i.e., most reliably. In the conventional situation in which it is uncertain how to achieve improvement, the above-mentioned method is adopted to suppress ridge marks, but it is desired to suppress ridge marks by a smaller-scale and lower-cost countermeasure.

Thus, the present embodiment is utilized in which the insulation coating bearing having insulation coating 19 is adopted, and the $\gamma$ value is changed from 0.7 in the standard bearing to 0.3 in the insulation coating bearing. Thereby, the cost can be lower than that in the case of the hybrid bearing, the F value can be reduced from 15 to 6 as shown in Table 2, and the second mathematical formula can be satisfied. Consequently, no ridge mark was generated in the insulation coating bearing. In this way, by adopting the insulation coating bearing, ridge marks can be suppressed to the same level as that in the case of the hybrid bearing at a lower cost than that in the case of the hybrid bearing.

Note that the F value in Table 2 was obtained through calculation, based on the capacitor component resulting from the oil film between inner ring 11 and the like and rolling elements 13 in each of various bearings, by imaginary electric circuit 50 in electric motor 100 including the capacitor component as the capacitive component in Fig. 3. In particular, electric motor 100 including rolling bearing 10 having insulation coating 19 like the insulation coating bearing further includes a capacitor component resulting from insulation coating 19 in addition to the capacitive component resulting from the oil film. In the case of the insulation coating bearing, calculation was performed by a series connection circuit of the capacitor component of the oil film and the capacitor component of insulation coating 19.

Example 2

While the value of parameter γ was controlled (changed) in Example 1, parameter β for the lubricant was controlled (changed) in Example 2. In other words, an examination was conducted by comparisons about the F values in the first mathematical formula and about the presence or absence of a ridge mark, by changing the type of lubricant LQ of rolling bearing 10.

The "standard bearing" is exactly the same as the "standard bearing" in Example 1. In the "standard bearing" in Example 2, oil (DURASYN (registered trademark) 166 POLYALPHAOLEFINS) was used as lubricant LQ. The "insulation coating bearing" is exactly the same as the "insulation coating bearing" in Example 1. Lubricant LQ in the "insulation coating bearing" was the same oil as that in the "standard bearing". On the other hand, lubricant LQ in a "β-value changed bearing" was changed to grease (Multemp SRL manufactured by Kyodo Yushi Co., Ltd.). Table 3 shows the results about the F values and the presence or absence of ridge marks in the respective bearings.

[Table 3]

Table 3

|  | Standard Bearing | Insulation Coating Bearing | β-Value Changed Bearing |
|---|---|---|---|
| Cost Level | - | Middle | Low |
| F Value in Mathematical Formula 1 | 15 | 6 | 8 |
| Presence or Absence of Ridge Mark | Presence | Absence | Absence |

As shown in Table 3, in the β-value changed bearing including grease as lubricant LQ that is different from oil included as lubricant LQ in the standard bearing, the effect of suppressing ridge marks could be achieved in the state in which the F value in the first mathematical formula was 10 or less. In this way, by adopting the β-value changed bearing, ridge marks can be suppressed to the same level as that in the case of the insulation coating bearing at a still lower cost than that in the case of the insulation coating bearing.

In the present example, in the β-value changed bearing including a different type of lubricant LQ having a different parameter β, the oil film (lubricant) between inner ring 11 and the like and rolling element 13 has a different dielectric constant, a different thickness, and a different dielectric breakdown voltage.

In the present example, the dielectric constant and the thickness of the oil film cause a change in the value of the capacitor component of the oil film on electric circuit 50. The dielectric breakdown voltage of the oil film causes a change in the threshold value at which switches S1 and S2 (see Fig. 3) operate to switch whether the oil film acts as capacitive components Ca1 and Ca2 (see Fig. 3) or as resistive components Ra11 and Ra12 at the time of dielectric breakdown of the oil film. An imaginary circuit (for example, electric circuit 50: see Fig. 3) for which lubricant LQ was changed in this way is assumed. The F value is calculated using electric circuit 50. In the present example, when the F value was consequently 10 or less as shown in Table 3, ridge marks were suppressed.

In the conventional countermeasures, suppression of occurrence of ridge marks in an insulation coating bearing or the like was confirmed by empirical information or experiments, and the conditions therefor were proposed. However, according to the conditions in the present embodiment (the present example), the countermeasure methods can be narrowed down, and many verification experiments that have been conventionally empirically performed can be omitted. Further, since the countermeasures against the generation of ridge marks can be theoretically selected, the explanation to the user can be accurately made.

Example 3

While the value of parameter γ was controlled (changed) in Example 1, parameter β for the lubricant was controlled (changed) in Example 2. On the other hand, in Example 3, the value of oil film parameter A is changed to 3. Specifically, among mechanical parameters α, particularly both the number of rotations of the tester (inner ring 11 and the like) that is determined on the user side and parameter β for the lubricant are controlled (changed). In other words, the examination was conducted by comparisons about the F values in the first mathematical formula and about the presence or absence of a ridge mark, in the state in which the number of rotations of inner ring 11 or the like of rolling bearing 10 and the type of lubricant LQ were changed to the number of rotations and the type different from those in Example 2.

The "standard bearing" is exactly the same as the "standard bearing" in Example 1. In the standard bearing, the number of rotations of inner ring 11 or the like was 1600 rotations per minute, and oil having a viscosity of 30 mm$^2$/s was

used as lubricant LQ. Further, the surface roughness of each of inner ring 11 and outer ring 12 was 0.02 μm. Consequently, the value of oil film parameter A for the standard bearing was about 6.5. The "insulation coating bearing" is exactly the same as the "insulation coating bearing" in Example 1. Also in the insulation coating bearing, the number of rotations was 1600 rotations per minute, and lubricant LQ was the same oil as that of the standard bearing. The surface roughness of each of inner ring 11 and outer ring 12 was 0.02 μm. Thus, the value of oil film parameter A for the insulation coating bearing was about 6.5. On the other hand, in the "oil film parameter A-changed bearing", low-viscosity oil was used as lubricant LQ. The viscosity of the low viscosity oil was 25 mm$^2$/s. The number of rotations of each of inner ring 11 and the like of the oil film parameter A-changed bearing was 400 rotations per minute, and the surface roughness of each of inner ring 11 and outer ring 12 was 0.02 μm. This is because the rolling contact surfaces of inner ring 11 and outer ring 12 are subjected to surface treatment. Consequently, the value of oil film parameter A for the standard bearing was 3. Table 4 shows the results about the F values and the presence or absence of ridge marks in the respective bearings.

[Table 4]

Table 4

|  | Standard Bearing | Insulation Coating Bearing | A-Changed Bearing |
|---|---|---|---|
| Cost Level | - | Middle | Low |
| F Value in Mathematical Formula 1 | 15 | 6 | 3 |
| Presence or Absence of Ridge Mark | Presence | Absence | Absence |

As shown in Table 4, in the oil film parameter A-changed bearing in which lubricant LQ was low viscosity oil different from oil included as lubricant LQ in the standard bearing, the number of rotations was reduced to 400 rotations per minute, and the value of oil film parameter A was reduced to 3, the effect of suppressing ridge marks could be achieved in the state in which the F value in the first mathematical formula was 10 or less. In this way, by adopting the oil film parameter A-changed bearing, ridge marks can be suppressed to the same level as that in the case of the insulation coating bearing at a lower cost than that in the case of the insulation coating bearing.

In the present example, oil film parameter A for lubricant LQ was changed to 3 to thereby cause a mixed lubrication state. In the mixed lubrication state, fluid lubrication and boundary lubrication coexist. In the fluid lubrication, a large amount of liquid or gas is interposed between two surfaces of a solid, and the fluid pressure in a membrane supports a load. In the boundary lubrication, not an oil film but an adsorption film physically and chemically supports a load. In other words, in the boundary lubrication, the oil film does not stably exist, and there is also a portion at which the rolling contact surface and the rolling element are in contact with each other. Thus, an oil film is not stably formed in lubricant LQ between inner ring 11 or the like and rolling element 13. In other words, since rolling element 13 is in contact with inner ring rolling contact surface 11A and the like, dielectric breakdown may be less likely to occur in the oil film therebetween. Alternatively, even if dielectric breakdown occurs, discharge craters are small due to a thin oil film, so that ridge marks are less likely to occur.

In the present example, an imaginary circuit (for example, electric circuit 50: see Fig. 3) in which rolling bearing 10 acts as a resistance (resistive component R1 and the like: see Fig. 3) is assumed on electric circuit 50. The F value is calculated using electric circuit 50. In the present example, consequently, ridge marks were suppressed when the F value was 10 or less as shown in Table 3.

In the conventional countermeasures, it was confirmed by empirical information or experiments that occurrence of ridge marks in the insulation coating bearing or the like was suppressed, and the conditions therefor were proposed. However, according to the conditions in the present embodiment (the present example), in what is called a boundary lubrication state in which oil film parameter A is 3, both the effect of preventing ridge marks caused by electrolytic corrosion and the effect of preventing peeling of the surface can be achieved, and thus, rolling bearing 10 having a sufficiently long life can be provided.

Example 4

In the present example, the following describes the result obtained by examining a method of determining, more specifically than in the embodiment, the values of the electrical resistance and the like of lubricant LQ in Fig. 3 in electric circuit 50 in Fig. 3 corresponding to rolling bearing 10 in Fig. 1. Fig. 9 is a schematic diagram of a model corresponding to the rolling bearing in Fig. 1 and used in the first parameter calculating step in Example 4. Referring to Fig. 9, standard rolling bearing 10 in Fig. 1 is used as a model in Example 4. The first parameter calculating step (S21) in Fig. 6 is performed based on the model. At this time, a characteristic value of an imaginary element assumed for first region LQ1 and second region LQ2 of lubricant LQ is obtained. The characteristic value of each imaginary element shows a value of the electrical resistance and a value of the capacitive component. The characteristic value is obtained by measurement or calculation (estimation).

In Fig. 9, for convenience of explanation, for example, the distance between some of the members is shown as being exaggerated to be slightly different from the actual one, as in Fig. 7. The same also applies to the schematic diagram of each model described later. First region LQ1 and second region LQ2 in Fig. 9 are the same as those in Fig. 7. A first region LQ3 in Fig. 9 is basically the same as first region LQ1. First region LQ3 corresponds to a region of rolling element 13 that is closest to outer ring rolling contact surface 12A. First region LQ3 is a region of lubricant LQ that is located between rolling contact surface 13A and outer ring rolling contact surface 12A in a portion in which rolling contact surface 13A of rolling element 13 and outer ring rolling contact surface 12A approach each other to come into contact with each other in an elliptical shape, for example, due to their elastic forces. A second region LQ4 is a region of lubricant LQ on the outer ring 12 side other than first region LQ3. Second region LQ4 is a region, for example, around first region LQ3 in axial direction AX (see Figs. 1 and 2).

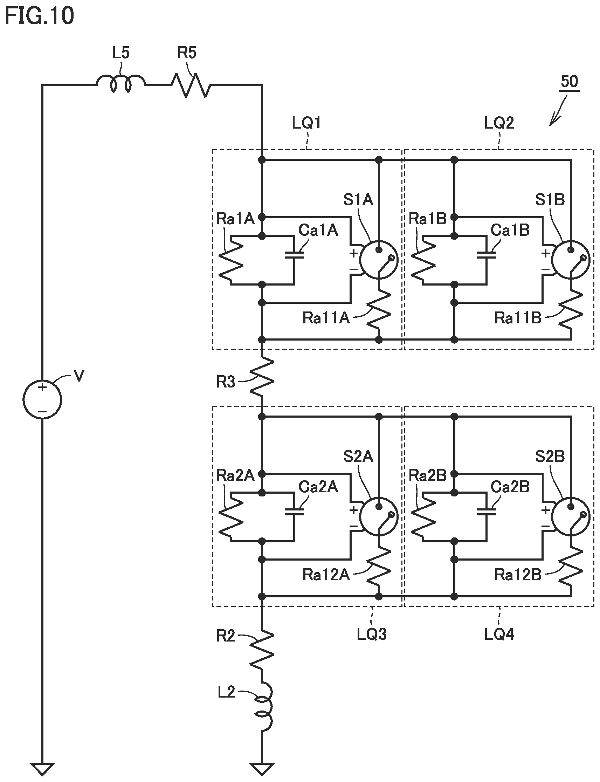

Fig. 10 is an equivalent circuit in which each component of the rolling bearing in Fig. 9 is assumed as an electrical element. Referring to Fig. 10, imaginary electric circuit 50 that is an equivalent circuit similar to that in Fig. 3 is shown. First region LQ1 of lubricant LQ is a region surrounded by a dotted line (a contact ellipse forming region). First region LQ1 includes a resistive component Ra1A, a capacitive component Ca1A, a switch S1A, and a resistive component Ra11A as assumed elements. Resistive component Ra1A is an electrical resistance by first region LQ1 between inner ring 11 and rolling element 13. Capacitive component Ca1A is an electrical capacitance by first region LQ1 between inner ring 11 and rolling element 13. Resistive component Ra1A and capacitive component Ca1A are connected in parallel, to which switch S1A is connected in parallel. Switch S1A corresponds to switch S1 in Fig. 1. Switch S1A includes a resistive component Ra11A in first region LQ1 at the time of dielectric breakdown.

Second region LQ2 of lubricant LQ is a region surrounded by a dotted line (a region other than the contact ellipse forming region). Second region LQ2 is connected in parallel with first region LQ1. Second region LQ2 includes a resistive component Ra1B, a capacitive component Ca1B, a switch S1B, and a resistive component Ra11B as assumed elements. Resistive component Ra1B is an electrical resistance by second region LQ2 between inner ring 11 and rolling element 13. Capacitive component Ca1B is an electrical capacitance by second region LQ2 between inner ring 11 and rolling element 13. Resistive component Ra1B and capacitive component Ca1B are connected in parallel, to which switch S1B is connected in parallel. Switch S1B corresponds to switch S1 in Fig. 1. Switch S1B includes a resistive component Ra11B in second region LQ2 at the time of dielectric breakdown.

First region LQ3 of lubricant LQ is a region surrounded by a dotted line (a contact ellipse forming region). First region LQ3 includes a resistive component Ra2A, a capacitive component Ca2A, a switch S2A, and a resistive component Ra12A as assumed elements. Resistive component Ra2A is an electrical resistance by first region LQ3 between outer ring 12 and rolling element 13. Capacitive component Ca2A is an electrical capacitance by first region LQ3 between outer ring 12 and rolling element 13. Resistive component Ra2A and capacitive component Ca2A are connected in parallel, to which switch S2A is connected in parallel. Switch S2A corresponds to switch S1 in Fig. 1. Switch S2A includes resistive component Ra12A in first region LQ3 at the time of dielectric breakdown.

Second region LQ4 of lubricant LQ is a region surrounded by a dotted line (a region other than the contact ellipse forming region). Second region LQ4 is connected in parallel with first region LQ3. Second region LQ4 includes a resistive component Ra2B, a capacitive component Ca2B, a switch S2B, and a resistive component Ra12B as assumed elements. Resistive component Ra2B is an electrical resistance by second region LQ4 between outer ring 12 and rolling element 13. Capacitive component Ca2B is an electrical capacitance by second region LQ4 between outer ring 12 and rolling element 13. Resistive component Ra2B and capacitive component Ca2B are connected in parallel, to which switch S2B is connected in parallel. Switch S2B corresponds to switch S1 in Fig. 1. Switch S2B includes resistive component Ra12B in second region LQ4 at the time of dielectric breakdown.

In addition, Fig. 10 shows resistive component R2 of outer ring 12, resistive component R3 of rolling element 13, inductive component L2 of a housing or the like of electric motor 100, inductive component L5 of shaft 22B or the like, and resistive component R5 of shaft 22B or the like, as in Fig. 3. The above-mentioned components, a parallel connection portion of first region LQ1 and second region LQ2, and a parallel connection portion of first region LQ3 and second region LQ4 are connected in series.

Fig. 10 mainly shows an equivalent circuit of lubricant LQ. Thus, Fig. 10 does not show resistive component R1 of inner ring 11, and inductive component L6 and resistive component R6 outside rolling bearing 10.

The following describes, as an example, a method of obtaining the value of each element in a portion (first region LQ3 and second region LQ4) of lubricant LQ between outer ring 12 and rolling element 13. Note that the method of obtaining the value of each element in a portion (first region LQ1 and second region LQ2) of lubricant LQ between inner ring 11 and rolling element 13 is also the same as described below.

The values of resistive components Ra2A and Ra2B shown in Figs. 9 and 10 are determined by one of the following first and second methods. The determined values are each about several MΩ (for example, 1 MΩ) or more.

By the first method, the values measured by a tester or the like under each condition are determined as characteristic values of resistive components Ra2A and Ra2B.

By the second method, the value of R obtained using the following formula (3) is estimated as a characteristic value of each of resistive components Ra2A and Ra2B.

[Math. 1]

$$R = Rv(T, P) \times \frac{d}{S} \dots (3)$$

In the formula (3), Rv(T, P) denotes a volume resistivity Rv of the lubricant determined by the function of a temperature T and a pressure P. Approximately, as temperature T rises, volume resistivity Rv increases. Approximately, pressure P rises, volume resistivity Rv decreases.

In the formula (3), S denotes an area of the oil film of the lubricant. In the case of resistive component Ra2A, area S shows an area of the contact ellipse. In the case of resistive component Ra2B, area S shows a value obtained by subtracting the area of the actual contact ellipse from the area of an imaginary ellipse obtained when the major axis and the minor axis of the contact ellipse are 1.5 times as large as those of the actual contact ellipse. In the formula (3), d denotes the thickness of the oil film of the lubricant.

Temperature T in the formula (3) denotes an operating temperature of rolling bearing 10. Pressure P in the formula (3) denotes a pressure applied to each region of the lubricant. In the case of resistive component Ra2A, pressure P is the surface pressure of the lubricant calculated from the load of rolling bearing 10. In the case of resistive component Ra2B, pressure P is a normal pressure not depending on the load.

Then, the values of capacitive components Ca2A and Ca2B are determined by one of the following first and second methods. The determined values are each about several ten pF or more and several hundred pF or less (for example, 10 pF or more and 500 pF or less).

By the first method, the values measured by an impedance analyzer or the like under each condition are determined as characteristic values of capacitive components Ca2A and Ca2B.

By the second method, the value of C obtained using the following formula (4) is estimated as a characteristic value of each of capacitive components Ca2A and Ca2B.

[Math. 2]

$$C = \varepsilon_0 \times \varepsilon(T, P) \times \frac{S}{d} \dots (4)$$

In the formula (4), $\varepsilon_0$ denotes a dielectric constant of a vacuum, in which case $\varepsilon_0$ = 8.854187816E-12. In the formula (4), $\varepsilon(T, P)$ denotes a relative dielectric constant $\varepsilon$ of the lubricant that is determined by the function of temperature T and pressure P. The value of relative dielectric constant $\varepsilon$ is about 3 or more and about 5 or less. As temperature T rises, the value of relative dielectric constant $\varepsilon$ increases. Further, as pressure P rises, the value of relative dielectric constant $\varepsilon$ decreases.

In the formula (4), S denotes an area in which a pair of electrodes constituting a capacitance assumed for each region of the lubricant face each other. In the case of capacitive component Ca2A, area S shows an area of the contact ellipse. In the case of capacitive component Ca2B, area S shows a value obtained by subtracting the area of the actual contact ellipse from the area of the imaginary ellipse appearing when the major axis and the minor axis of the contact ellipse are 1.5 times as large as those of the actual contact ellipse. In other words, area S in the formula (4) is equal to area S (the area of the oil film) in the formula (3).

In the formula (4), d denotes the thickness of the oil film of the lubricant. Thickness d of the oil film in the formula (4) is equal to thickness d of the oil film in the formula (3). Temperature T in the formula (4) denotes the operating temperature of rolling bearing 10. Pressure P in the formula (4) denotes the pressure applied to each region of the lubricant. In the case of capacitive component Ca2A, pressure P is the surface pressure of the lubricant calculated from the load of rolling bearing 10. In the case of capacitive component Ca2B, pressure P is a normal pressure not depending on the load.

Then, by one of the following first and second methods, the value of a dielectric breakdown voltage Vsh is determined, at which switches S2A and S2B in first and second regions LQ3 and LQ4 on the outer ring side are turned on. Also for switches S1A and S1B in first and second regions LQ3 and LQ4 on the inner ring side, the value of dielectric breakdown voltage Vsh is similarly determined. Note that the determined values are approximately several volts or more and some dozen volts or less (for example, 1 volt or more and 15 volts or less).

By the first method, the value measured by a tester or the like under each condition is determined as a value of dielectric breakdown voltage Vsh.

By the second method, the value of Vsh obtained using the following formula (5) is estimated as a value of dielectric breakdown voltage Vsh of each of switches S2A and S2B.
[Math. 3]

$$Vsh = V(P, T, \varepsilon, R) \times d \dots (5)$$

Based on the formula (5), the value of dielectric breakdown voltage Vsh is determined by: voltage $V(P, T, \varepsilon, R)$ determined by the values of pressure P, temperature T, relative dielectric constant $\varepsilon$ of the lubricant, and resistive components Ra2A and Ra2B; and thickness d of the oil film of the lubricant. Dielectric breakdown voltage Vsh is higher as pressure P is higher. Dielectric breakdown voltage Vsh is lower as temperature T is higher. Dielectric breakdown voltage Vsh is lower as relative dielectric constant $\varepsilon$ of the lubricant is higher. Dielectric breakdown voltage Vsh is higher as resistive components Ra2A and Ra2B are higher. The formula (5) is similarly established for each of the lubricants on the outer and inner ring sides.

When dielectric breakdown voltage Vsh of switch S2A is taken into consideration, pressure P in the formula (5) is the surface pressure of the lubricant that is calculated from the load of rolling bearing 10. When dielectric breakdown voltage Vsh of switch S2B is taken into consideration, pressure P is a normal pressure not depending on the load.

Temperature T in the formula (5) is the operating temperature of rolling bearing 10. The value of relative dielectric constant $\varepsilon$ of the lubricant in the formula (5) is the same value as $\varepsilon(T, P)$ in the formula (4). The value of R in the formula (5) is the same value as each of resistive components Ra2A and Ra2B obtained from the formula (3). In other words, when dielectric breakdown voltage Vsh of switch S2A in first region LQ3 is obtained, resistive component Ra2A is used. When dielectric breakdown voltage Vsh of switch S2B in second region LQ4 is obtained, resistive component Ra2B is used.

Lastly, the values of resistive components Ra12A and Ra12B at the time of dielectric breakdown are determined by one of the following first and second methods. The determined values are each about several $\Omega$ (for example, 0.1 $\Omega$ or more and 5 $\Omega$ or less).

By the first method, under each condition, the values are calculated by an oscilloscope based on Vsh/I from: dielectric breakdown voltage Vsh of each of switches S2A and S2B; and a current value I at each of switches S2A and S2B to which the voltage is applied.

The second method also includes a method of setting each of resistive components Ra12A and Ra12B to be 1$\Omega$ as a provisional value.

(Summary of Present Example, and Functions and Effects)

The method of designing a rolling bearing according to the disclosure in the present example is basically the same, in terms of features, as the method of designing the rolling bearing according to the first embodiment. Specifically, the method includes the same parts as those described above, but includes the following feature. In the first parameter calculating step (S21), the characteristic values (the value of the electrical resistance, the value of the electrical capacitance, and the value of the dielectric breakdown voltage of the switch) of the imaginary elements assumed for first regions LQ1 and LQ3 and second regions LQ2 and LQ4 in imaginary electric circuit 50 corresponding to rolling bearing 10 are obtained.

The method of designing a rolling bearing includes the following feature. In imaginary electric circuit 50, first regions LQ1 and LQ3 and second regions LQ2 and LQ4 are connected in parallel. In each of first regions LQ1 and LQ3 and second regions LQ2 and LQ4, a resistive component (Ra1A, Ra1B, Ra2A, Ra2B) and a capacitive component (Ca1A, Ca1B, Ca2A, Ca2B) as the above-mentioned imaginary elements are connected in parallel. The characteristic value of the resistive component (Ra1A, Ra1B, Ra2A, Ra2B) is estimated as the above-mentioned formula (3) from: volume resistivity Rv of lubricant LQ determined by the function of temperature T and pressure P; thickness d of the oil film of lubricant LQ in one of first regions LQ1 and LQ3 and second regions LQ2 and LQ4; and area S of the oil film of lubricant LQ.

The method of designing a rolling bearing includes the following feature. The characteristic value of the capacitive component (Ca1A, Ca1B, Ca2A, Ca2B) is estimated as the above-mentioned formula (4) from: dielectric constant $\varepsilon_0$ of a vacuum; relative dielectric constant $\varepsilon$ of the lubricant determined by the function of temperature T and pressure P; area S of the oil film as an area in which the pair of electrodes constituting the capacitance assumed for one of first regions LQ1, LQ3 and second regions LQ2, LQ4 face each other; and thickness d of the oil film as lubricant LQ in one of first regions LQ1, LQ3 and second regions LQ2, LQ4.

The method of designing a rolling bearing includes the following feature. First regions LQ1 and LQ3 and second regions LQ2 and LQ4 include switches S1A, S1B, S2A, and S2B, respectively, each of which is connected in parallel with the resistive component and the capacitive component. Switches S1A, S1B, S2A, and S2B are each turned on when the voltage applied to lubricant LQ exceeds dielectric breakdown voltage Vsh. Dielectric breakdown voltage Vsh of each of switches S1A, S1B, S2A, and S2B is estimated as the above-mentioned formula (5) from: voltage V determined by each of the values of pressure P, temperature T, relative dielectric constant $\varepsilon$ of the lubricant, and the resistive component; and thickness d of the oil film of the lubricant.

Parameter $\beta$ for lubricant LQ is obtained based on "resistive components Ra1A, Ra1B, Ra2A, Ra2B", "capacitive components Ca1A, Ca1B, Ca2A, Ca2B", "dielectric breakdown voltage Vsh", and the like that are obtained as described above.

Example 5

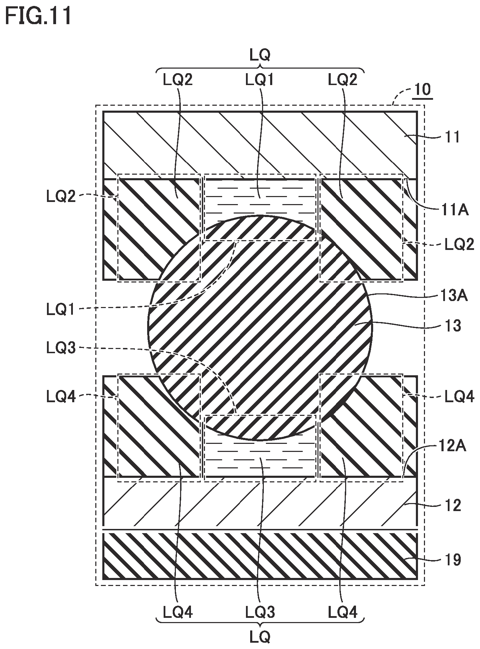

Fig. 11 is a schematic diagram of a model corresponding to the rolling bearing in Fig. 1 and used in the first parameter calculating step in Example 5. Referring to Fig. 11, the model corresponding to rolling bearing 10 in the present example is basically the same as that in Fig. 9 in Example 4. Thus, in Fig. 11, the same components as those in Fig. 9 are denoted by the same reference characters, and the description thereof will not be repeated. However, in the model of rolling bearing 10 in Fig. 11, insulation coating 19 is formed on outer ring 12. In Example 5, a characteristic value of an imaginary coating capacitive component assumed for insulation coating 19 in Fig. 11 is obtained.

In Fig. 11, insulation coating 19 is shown on the lower side of outer ring 12 (on the side opposite to rolling element 13) from the viewpoint of easy illustration of the positional relation with an equivalent circuit that will be described later. In practice, however, insulation coating 19 may be located on the rolling element 13 side (the upper side) of outer ring 12, as shown in Fig. 1. No influence is exerted on the calculation result even if insulation coating 19 exists on either of the upper and lower sides of outer ring 12. Fig. 11 also shows an example in which insulation coating 19 is applied to outer ring 12. However, also in the example in which insulation coating 19 is applied to inner ring 11, the characteristic value of the coating capacitive component can be obtained by the method described below basically as in the case where insulation coating 19 is applied to outer ring 12.

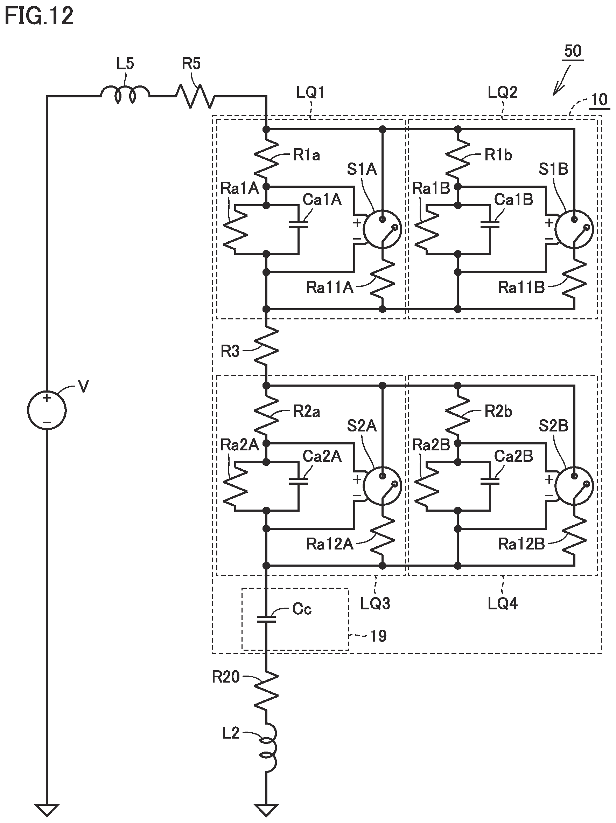

Fig. 12 is an equivalent circuit in which each of components of the rolling bearing in Fig. 11 is assumed as an electrical element. Referring to Fig. 12, the configuration of electric circuit 50 herein is roughly the same as that of electric circuit 50 in Example 4 in Fig. 10. In the present example, however, electric circuit 50 of the entire rolling bearing 10 is shown. Thus, in Fig. 12, first region LQ1 additionally includes a resistive component R1a. Similarly, in Fig. 12, second region LQ2 includes a resistive component R1b. First region LQ3 includes a resistive component R2a. Second region LQ4 includes a resistive component R2b. Each of these resistive components is connected in series to the parallel connection portion in each region. Resistive components R1a and R1b in Fig. 12 are resistive components of inner ring 11. Resistive components R2a and R2b in Fig. 12 are resistive components of outer ring 12.

In Fig. 12, a coating capacitive component Cc corresponding to insulation coating 19 is connected inside electric circuit 50 of rolling bearing 10. A resistive component R20 is further connected between coating capacitive component Cc and inductive component L2. Resistive component R20 is a resistive component of a housing or the like of electric motor 100.

Coating capacitive component Cc of insulation coating 19 in the present example as described above is determined by one of the following first and second methods. The determined value is about several pF or more and several hundred pF or less (for example, 1 pF or more and 100 pF or less).

By the first method, the value measured by an impedance analyzer or the like under each condition is determined as a characteristic value of coating capacitive component Cc.

By the second method, the value of Cc obtained using the following formula (6) is estimated as a characteristic value of coating capacitive component Cc.

[Math. 4]

$$Cc = \varepsilon_0 \times \varepsilon \times \frac{2\pi}{\ln\left(\dfrac{b}{a}\right)} \times L \ldots (6)$$

In the formula (6), $\varepsilon_0$ denotes a dielectric constant of a vacuum, in which case $\varepsilon_0 = 8.854187816E\text{-}12$. In the formula (6), $\varepsilon$ denotes a relative dielectric constant of insulation coating 19. In the formula (6), "a" denotes an inner radius of insulation coating 19. The inner radius indicates the diameter of the surface of insulation coating 19 on the side on which the surface is not exposed. In other words, when insulation coating 19 is formed on the outside of outer ring 12, "a" means the outer diameter of outer ring 12. In the formula (6), "b" denotes an outer radius of insulation coating 19. The outer radius indicates the diameter of the surface of insulation coating 19 on the side on which the surface is exposed. In other words, when insulation coating 19 is formed on the outside of outer ring 12, "b" means the sum value of the outer diameter of outer ring 12 and the thickness of insulation coating 19. In the formula (6), L denotes the width of rolling bearing 10, i.e., the dimension of rolling bearing 10 in the left-right direction in Fig. 11.

(Summary of Present Example, and Functions and Effects)

The method of designing a rolling bearing according to the disclosure in the present example includes the following feature in addition to the feature of the method of designing a rolling bearing in each of the first embodiment and Example 4. In the second parameter calculating step (S22), the characteristic value of imaginary coating capacitive component Cc assumed for insulation coating 19 formed on at least one of inner ring 11 and outer ring 12 in imaginary electric circuit 50 is obtained. The characteristic value of imaginary coating capacitive component Cc is estimated as the above-mentioned formula (6) from dielectric constant $\varepsilon_0$ of a vacuum, relative dielectric constant $\varepsilon$ of insulation coating 19, inner radius a of insulation coating 19, outer radius b of insulation coating 19, and width L of rolling bearing 10.

In the present example, in addition to the calculation according to Example 4, constant $\gamma$ for other parameters is obtained based on the value of coating capacitive component Cc of insulation coating 19 that is obtained as described above.

Example 6

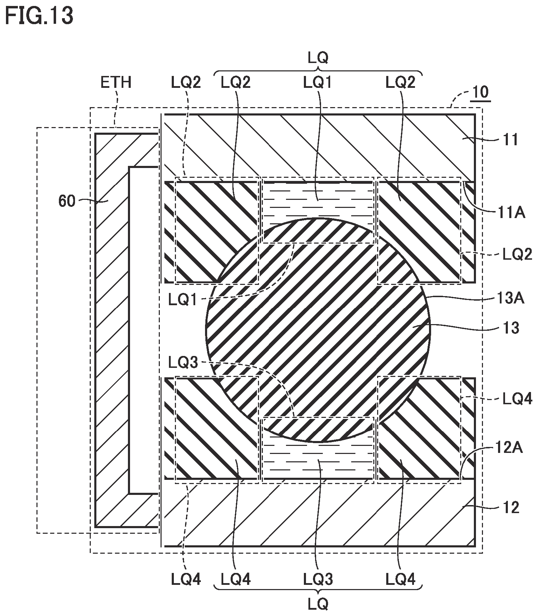

Fig. 13 is a schematic diagram of a model corresponding to the rolling bearing in Fig. 1 and used in the first parameter calculating step in Example 6. Referring to Fig. 13, the model corresponding to rolling bearing 10 in the present example is basically the same as that in Fig. 9 in Example 4. Thus, in Fig. 13, the same components as those in Fig. 9 are denoted by the same reference characters, and the description thereof will not be repeated. However, in the model of rolling bearing 10 in Fig. 13, a grounding mechanism ETH connecting inner ring 11 and outer ring 12 is formed. Grounding mechanism ETH is formed of a grounding member 60 for energizing inner ring 11 and outer ring 12. In Example 6, the value of grounding member 60 in Fig. 13 is obtained.

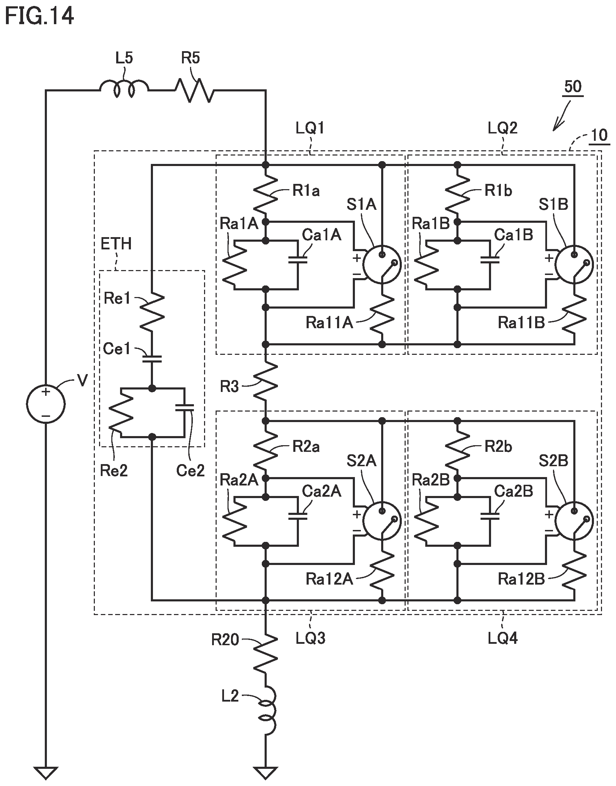

Fig. 14 is an equivalent circuit in which each of components of the rolling bearing in Fig. 13 is assumed as an electrical element. Although represented as grounding mechanism ETH in Fig. 13, grounding mechanism ETH may be seal member 15 in Fig. 1 that is made of an electrically conductive rubber. Seal member 15 in Fig. 1 that is made of an electrically conductive rubber is an equivalent circuit of grounding mechanism ETH in Fig. 14. Referring to Fig. 14, the configuration of electric circuit 50 herein is roughly the same as that of electric circuit 50 in Example 4 in Fig. 10. As in Fig. 12, Fig. 14 shows electric circuit 50 of the entire rolling bearing 10.

In Fig. 14, a resistive component Re1, a capacitive component Ce1, a resistive component Re2, and a capacitive component Ce2 that correspond to grounding member 60 of grounding mechanism ETH are connected inside electric circuit 50 of rolling bearing 10. In Fig. 13, grounding mechanism ETH (grounding member 60) is disposed in parallel with rolling bearing 10. In Fig. 14, grounding mechanism ETH is arranged in parallel with electric circuit 50 of rolling bearing 10.

In Fig. 14, in grounding mechanism ETH, resistive component Re2 and capacitive component Ce2 are connected in parallel, and resistive component Re1 and capacitive component Ce1 are connected in series. Grounding mechanism ETH may have such a configuration, but is not limited thereto. Grounding mechanism ETH may include a capacitive component or may include an inductive component (not shown). Grounding mechanism ETH may include only one of the capacitive component and the inductive component, or may include both the capacitive component and the inductive component. Further, the resistive component and the reactance component (the capacitive component or the inductive component) may be connected in series or in parallel.

The value of grounding member 60 in the present example is obtained by the following method. First, an impedance value (a complex impedance) of grounding member 60 is measured by an impedance analyzer. From the measured impedance value, it is decided whether grounding member 60 has a capacitive component or an inductive component. Specifically, if the reactance of the complex impedance of grounding member 60 has a positive value, grounding member 60 has an inductive component, and if the reactance has a negative value, grounding member 60 has a capacitive component. Grounding member 60 may have both a capacitive component and an inductive component. When grounding member 60 has both the capacitive component and the inductive component, the capacitive component and the inductive component of grounding member 60 can be decomposed by the impedance angle appearing when the value of the complex impedance of grounding member 60 is shown on a complex plane.

It is decided by a measurer when measuring the impedance value of grounding member 60 as to whether grounding member 60 has a series circuit or a parallel circuit that is formed of a reactance component (a capacitive component or an inductive component) and a resistive component. Specifically, it is assumed that the resistive component and the capacitive component are connected in series and also connected in parallel, for example, as in grounding mechanism ETH in Fig. 14. First, the impedance value of grounding mechanism ETH is measured on the assumption that the resistive component and the capacitive component are connected in series like resistive component Re1 and capacitive component Ce1. Secondly, the impedance value of grounding mechanism ETH is measured on the assumption that the resistive component and the capacitive component are connected in parallel like resistive component Re2 and capacitive component Ce2. Both of these measurement results are compared to examine which value is more reliable. Based on the examination result, it is determined whether grounding mechanism ETH includes a series circuit or a parallel circuit that is formed of the resistive component and the capacitive component. Also in the case where grounding mechanism ETH includes the inductive component, it is examined by the same method as described above whether grounding mechanism ETH includes a series connection to the resistive component or a parallel connection with the resistive component.

(Summary of Present Example, and Functions and Effects)

The method of designing a rolling bearing according to the disclosure in the present example includes the following feature in addition to the feature of the method of designing a rolling bearing in each of the first embodiment and Example 4. In the second parameter calculating step (S22), the impedance value of grounding mechanism ETH (grounding member 60) connecting inner ring 11 and outer ring 12 is measured. It is decided from the impedance value of grounding mechanism ETH whether grounding mechanism ETH has a capacitive component or an inductive component.

In the method of designing a rolling bearing, it is decided whether grounding mechanism ETH has a series circuit or a parallel circuit that is formed of a resistive component and a reactance component that is at least one of the capacitive component and the inductive component. In the above decision, the first impedance value of grounding mechanism ETH based on the assumption that the reactance component and the resistive component are connected in series is measured, and the second impedance value of grounding mechanism ETH based on the assumption that the reactance component and the resistive component are connected in parallel is measured. The first impedance value and the second impedance value are compared.

In the present example, in addition to the calculation according to Example 4, constant $\gamma$ for other parameters is obtained based on the impedance value of grounding mechanism ETH obtained as described above.

It should be understood that the embodiments disclosed herein are illustrative and non-restrictive in every respect. At least two of the embodiments disclosed herein may be combined as long as there is no inconsistency. The basic scope of the present disclosure is defined by the terms of the claims, rather than the description above, and is intended to include any modifications within the scope and meaning equivalent to the terms of the claims.

Hereinafter, various configurations of the present disclosure will be summarized as additional aspects.

(Additional Aspect 1)

A method of designing a rolling bearing, the method comprising the steps of:

preparing a first mathematical formula that allows a decision to be made as to whether or not suppression of electrolytic corrosion in a rolling bearing is enabled, the rolling bearing including an inner ring, an outer ring disposed on an outer circumferential side of the inner ring, a plurality of rolling elements rollably disposed between the inner ring and the outer ring, and a lubricant; and
determining configurations of the inner ring, the outer ring, and the plurality of rolling elements based on use conditions for the rolling bearing, wherein
the first mathematical formula is expressed as:

$$F = f(\alpha, \beta, \gamma, \delta) \ldots (1),$$

where $\alpha$ denotes a mechanical parameter for the inner ring, the outer ring, and the plurality of rolling elements, $\beta$ denotes a parameter for the lubricant, $\gamma$ denotes a constant for other parameters, and $\delta$ denotes a parameter obtained from the use conditions,
the step of determining includes a step of deciding whether or not a second mathematical formula is satisfied according to the use conditions, the second mathematical formula being expressed as:

$$F \le 10 \ldots (2),$$

the step of determining includes a first parameter calculating step of obtaining a parameter $\beta$ for the lubricant, and in the first parameter calculating step,

the lubricant is divided into a first region of the lubricant and a second region of the lubricant in a region in which a first rolling contact surface and a second rolling contact surface approach each other to form an ellipse, the first region being located between the first rolling contact surface and the second rolling contact surface, the second region being other than the first region in the region, the first rolling contact surface being a rolling contact surface of at least one of the inner ring and the outer ring, the second rolling contact surface being a rolling contact surface of each of the rolling elements, and

a characteristic value of an imaginary element assumed for the first region and the second region in an imaginary electric circuit corresponding to the rolling bearing is obtained.

(Additional Aspect 2)

The method of designing a rolling bearing according to Additional Aspect 1, wherein

the first region and the second region are connected in parallel in the imaginary electric circuit,
a resistive component and a capacitive component each as the imaginary element are connected in parallel in each of the first region and the second region, and
a characteristic value of the resistive component is estimated as:
[Math. 5]

$$R = Rv(T,P) \times \frac{d}{S} ... (3)$$

from: a volume resistivity Rv of the lubricant, the volume resistivity Rv being determined by a function of a temperature T and a pressure P; a thickness d of an oil film of the lubricant in one of the first region and the second region; and an area S of the oil film of the lubricant.

(Additional Aspect 3)

The method of designing a rolling bearing according to Additional Aspect 2, wherein
a characteristic value of the capacitive component is estimated as:
[Math. 6]

$$C = \varepsilon_0 \times \varepsilon(T,P) \times \frac{S}{d} ... (4)$$

from: a dielectric constant $\varepsilon_0$ of a vacuum; a relative dielectric constant $\varepsilon$ of the lubricant, the relative dielectric constant $\varepsilon$ being determined by the function of the temperature T and the pressure P; the area S of the oil film, the area S being an area in which a pair of electrodes face each other, the pair of electrodes constituting a capacitance assumed for one of the first region and the second region; and the thickness d of the oil film as the lubricant in one of the first region and the second region.

(Additional Aspect 4)

The method of designing a rolling bearing according to Additional Aspect 2 or 3, wherein

each of the first region and the second region includes a switch connected in parallel with the resistive component and the capacitive component,
the switch is turned on when a voltage applied to the lubricant exceeds a dielectric breakdown voltage, and
the dielectric breakdown voltage of the switch is estimated as:
[Math. 7]

$$Vsh = V(P,T,\varepsilon,R) \times d ... (5)$$

from: a voltage V determined by values of the pressure P, the temperature T, and a relative dielectric constant $\varepsilon$ of the lubricant, and the resistive component; and the thickness d of the oil film of the lubricant.

(Additional Aspect 5)

The method of designing a rolling bearing according to any one of Additional Aspects 1 to 4, wherein, in the first parameter calculating step, the parameter β for the lubricant is calculated in consideration of changes in volume resistivity, viscosity, dielectric constant, and dielectric breakdown strength of the lubricant according to an operating temperature of the rolling bearing including the lubricant.

(Additional Aspect 6)

The method of designing a rolling bearing according to any one of Additional Aspects 1 to 5, wherein

the step of determining further includes:

a second parameter calculating step of obtaining the mechanical parameter $\alpha$ and the constant $\gamma$ for the other parameters;
a third parameter calculating step of obtaining the parameter $\delta$ obtained from the use conditions; and
a step of calculating an F value obtained by the first mathematical formula from: the mechanical parameter $\alpha$, the parameter $\beta$ for the lubricant, and the constant $\gamma$ for the other parameters, which are obtained in the first parameter calculating step and the second parameter calculating step; and the parameter $\delta$ obtained from the use conditions, the first mathematical formula being expressed as:

$$F = f(\alpha, \beta, \gamma, \delta) \ldots (1),$$

in the third parameter calculating step, the parameter $\delta$ obtained from the use conditions is obtained based on an output value obtained through calculation by inputting the use conditions to the imaginary electric circuit assembled by assuming, as an element, a portion formed of the inner ring, the outer ring, the rolling elements, and the lubricant that constitute the rolling bearing, and
in the step of calculating an F value, the mechanical parameter $\alpha$, the parameter $\beta$ for the lubricant, the constant $\gamma$ for the other parameters, and the parameter $\delta$ obtained from the use conditions are substituted into the first mathematical formula.

(Additional Aspect 7)

The method of designing a rolling bearing according to Additional Aspect 6, wherein

in the second parameter calculating step, a characteristic value of an imaginary coating capacitive component assumed for an insulation coating formed on at least one of the inner ring and the outer ring in the imaginary electric circuit is obtained, and
the characteristic value of the imaginary coating capacitive component is estimated as:
[Math. 8]

$$Cc = \varepsilon_0 \times \varepsilon \times \frac{2\pi}{\ln\left(\frac{b}{a}\right)} \times L \ldots (6)$$

from: a dielectric constant $\varepsilon_0$ of a vacuum; a relative dielectric constant $\varepsilon$ of the insulation coating; an inner radius a of the insulation coating; an outer radius b of the insulation coating; and a width L of the rolling bearing.

(Additional Aspect 8)

The method of designing a rolling bearing according to Additional Aspect 6 or 7, wherein

in the second parameter calculating step, an impedance value of a grounding mechanism that connects the inner ring and the outer ring is measured, and
it is decided from the impedance value of the grounding mechanism whether the grounding mechanism has a capacitive component or an inductive component.

(Additional Aspect 9)

The method of designing a rolling bearing according to Additional Aspect 8, wherein

a decision is made as to whether the grounding mechanism includes a series circuit or a parallel circuit, the series circuit and the parallel circuit each being formed of a resistive component and a reactance component that is at least one of the capacitive component and the inductive component, and
in the decision,

a first impedance value of the grounding mechanism based on an assumption that the reactance component and the resistive component are connected in series is measured, and a second impedance value of the grounding mechanism based on an assumption that the reactance component and the resistive component are connected in parallel is measured, and
the first impedance value and the second impedance value are compared.

(Additional Aspect 10)

The method of designing a rolling bearing according to any one of Additional Aspects 1 to 9, wherein the step of determining is repeated until the second mathematical formula is satisfied by the step of deciding, the second mathematical formula being expressed as:

$$F \leq 10 \quad \cdots \quad (2).$$

(Additional Aspect 11)

A rolling bearing used in a motor under inverter control, the rolling bearing comprising:

an inner ring;
an outer ring disposed on an outer circumferential side of the inner ring;
a plurality of rolling elements rollably disposed between the inner ring and the outer ring; and
a lubricant enclosed in a gap portion formed between the inner ring and the outer ring, the plurality of rolling elements being disposed in the gap portion, wherein
a number of rotations during use of the rolling bearing is 100 rpm or more and 20000 rpm or less,
a voltage applied during use of the rolling bearing is 2 V or more and 100 V or less, and
an F value calculated from a first mathematical formula satisfies a second mathematical formula, the first mathematical formula being expressed as:

$$F = f(\alpha, \beta, \gamma, \delta) \dots (1),$$

the second mathematical formula being expressed as:

$$F \leq 10 \dots (2),$$

where $\alpha$ denotes a mechanical parameter, $\beta$ denotes a parameter for the lubricant, $\gamma$ denotes a constant for other parameters, and $\delta$ denotes a parameter obtained from use conditions.

(Additional Aspect 12)

The rolling bearing according to Additional Aspect 11, wherein a value of an oil film parameter A for the lubricant is 3 or less.

(Additional Aspect 13)

The rolling bearing according to Additional Aspect 11 or 12, wherein the lubricant is grease.

(Additional Aspect 14)

The rolling bearing according to any one of Additional Aspects 11 to 13, further comprising a seal member fitted to an inner diameter surface of the outer ring and disposed to be in contact with the inner ring, wherein
the seal member is formed of an electrically conductive rubber material.

(Additional Aspect 15)

An electric motor comprising a stator and a rotor disposed radially inside the stator, the rotor being rotatable, wherein

the rolling bearing according to any one of Additional Aspects 11 to 14 is disposed between the stator and the rotor, and an inverter device capable of controlling rotation of the rotor is connected.

(Additional Aspect 16)

A method of manufacturing a rolling bearing, the method comprising the steps of:

preparing an inner ring, an outer ring disposed on an outer circumferential side of the inner ring, a plurality of rolling elements rollably disposed between the inner ring and the outer ring, and a lubricant;
combining the inner ring, the outer ring, and the plurality of rolling elements; and
enclosing the lubricant in a gap portion formed between the inner ring and the outer ring, the plurality of rolling elements being disposed in the gap portion, wherein
the inner ring, the outer ring, the plurality of rolling elements, and the lubricant are prepared such that an F value derived from a first mathematical formula satisfies a second mathematical formula, the first mathematical formula being expressed as:

$$F = f(\alpha, \beta, \gamma, \delta) \dots (1),$$

the second mathematical formula being expressed as:

$$F \leq 10 \dots (2),$$

where $\alpha$ denotes a mechanical parameter, $\beta$ denotes a parameter for the lubricant, $\gamma$ denotes a constant for other parameters, and $\delta$ denotes a parameter obtained from use conditions for the rolling bearing.

(Additional Aspect 17)

The method of manufacturing a rolling bearing according to Additional Aspect 16, wherein, in the step of preparing, the mechanical parameter $\alpha$, the parameter $\beta$ for the lubricant, the constant $\gamma$ for the other parameters, and types of the inner ring, the outer ring, and the rolling elements are selected according to an arbitrary number of rotations of each of the inner ring and the outer ring during use, a load applied to each of the inner ring and the outer ring, and a value of a voltage applied to the rolling bearing.

(Additional Aspect 18)

A method of designing a rolling bearing, the method comprising the steps of:

preparing a first mathematical formula that allows a decision to be made as to whether or not suppression of electrolytic corrosion in a rolling bearing is enabled, the rolling bearing including an inner ring, an outer ring disposed on an outer circumferential side of the inner ring, a plurality of rolling elements rollably disposed between the inner ring and the outer ring, and a lubricant; and
determining configurations of the inner ring, the outer ring, and the plurality of rolling elements based on use conditions for the rolling bearing, wherein
the first mathematical formula is expressed as:

$$F = f(\alpha, \beta, \gamma, \delta) \dots (1),$$

where $\alpha$ denotes a mechanical parameter for the inner ring, the outer ring, and the plurality of rolling elements, $\beta$ denotes a parameter for the lubricant, $\gamma$ denotes a constant for other parameters, and $\delta$ denotes a parameter obtained from the use conditions, and
the step of determining includes a step of deciding whether or not a second mathematical formula is satisfied according to the use conditions, the second mathematical formula being expressed as:

$$F \leq 10 \ldots (2).$$

(Additional Aspect 19)

The method of designing a rolling bearing according to Additional Aspect 18, wherein

the step of determining includes a first parameter calculating step of obtaining a parameter $\beta$ for the lubricant, and in the first parameter calculating step,

the lubricant is divided into a first region of the lubricant and a second region of the lubricant in a region in which a first rolling contact surface and a second rolling contact surface approach each other to form an ellipse, the first region being located between the first rolling contact surface and the second rolling contact surface, the second region being other than the first region in the region, the first rolling contact surface being a rolling contact surface of at least one of the inner ring and the outer ring, the second rolling contact surface being a rolling contact surface of each of the rolling elements, and
the parameter $\beta$ for the lubricant is calculated, considering that a volume resistivity, a viscosity, a dielectric constant, and a dielectric breakdown strength are different between the first region and the second region due to a pressure.

(Additional Aspect 20)

The method of designing a rolling bearing according to Additional Aspect 19, wherein, in the first parameter calculating step, the parameter $\beta$ for the lubricant is calculated in consideration of changes in volume resistivity, viscosity, dielectric constant, and dielectric breakdown strength of the lubricant according to an operating temperature of the rolling bearing including the lubricant.

(Additional Aspect 21)

The method of designing a rolling bearing according to Additional Aspect 19 or 20, wherein

the step of determining further includes:

a second parameter calculating step of obtaining the mechanical parameter $\alpha$ and the constant $\gamma$ for the other parameters;
a third parameter calculating step of obtaining the parameter $\delta$ obtained from the use conditions; and
a step of calculating an F value obtained by the first mathematical formula from: the mechanical parameter $\alpha$, the parameter $\beta$ for the lubricant, and the constant $\gamma$ for the other parameters, which are obtained in the first parameter calculating step and the second parameter calculating step; and the parameter $\delta$ obtained from the use conditions, the first mathematical formula being expressed as:

$$F = f(\alpha, \beta, \gamma, \delta) \ldots (1),$$

in the third parameter calculating step, the parameter $\delta$ obtained from the use conditions is obtained based on an output value obtained through calculation by inputting the use conditions to an imaginary electric circuit assembled by assuming, as an element, a portion formed of the inner ring, the outer ring, the rolling elements, and the lubricant that constitute the rolling bearing, and
in the step of calculating an F value, the mechanical parameter $\alpha$, the parameter $\beta$ for the lubricant, the constant $\gamma$ for the other parameters, and the parameter $\delta$ obtained from the use conditions are substituted into the first mathematical formula.

(Additional Aspect 22)

The method of designing a rolling bearing according to any one of Additional Aspects 18 to 21, wherein the step of determining is repeated until the second mathematical formula is satisfied by the step of deciding, the second mathematical formula being expressed as:

$$F \leq 10 \quad \cdots \quad (2).$$

REFERENCE SIGNS LIST

10 rolling bearing, 11 inner ring, 11A inner ring rolling contact surface, 12 outer ring, 12A outer ring rolling contact surface, 13 rolling element, 13A rolling contact surface, 14 cage, 15 seal member, 16 first seal groove, 17 second seal groove, 18 pocket, 21 stator, 21A stator yoke, 21B stator core, 21C stator coil, 22 rotor, 22A permanent magnet, 22B shaft, 30 electrically conductive brush, 31 brush, 31a positive-side brush, 31b negative-side brush, 32 fixing portion, 40 inverter device, 50 electric circuit, 60 grounding member, 100 electric motor, ETH grounding mechanism, LQ lubricant, LQ1, LQ3 first region, LQ2, LQ4 second region, Ca1, Ca2, Ce1, Ce2 capacitive component, Cc coating capacitive component, L2, L5, L6 inductive component, R1, R1a, R1b, R2, R2a, R2b, R3, R5, R6, Ra1, Ra1A, Ra1B, Ra2, Ra2A, Ra2B, Ra11, Ra11A, Ra11B, Ra12, Ra12A, Ra12B, Re1, Re2, R20 resistive component, S1, S1A, S1B, S2, S2A, S2B switch.

**Claims**

1.   A method of designing a rolling bearing, the method comprising the steps of:

preparing a first mathematical formula that allows a decision to be made as to whether or not suppression of electrolytic corrosion in a rolling bearing is enabled, the rolling bearing including an inner ring, an outer ring disposed on an outer circumferential side of the inner ring, a plurality of rolling elements rollably disposed between the inner ring and the outer ring, and a lubricant; and
determining configurations of the inner ring, the outer ring, and the plurality of rolling elements based on use conditions for the rolling bearing, wherein
the first mathematical formula is expressed as:

$$F = f(\alpha, \beta, \gamma, \delta) \dots (1),$$

where $\alpha$ denotes a mechanical parameter for the inner ring, the outer ring, and the plurality of rolling elements, $\beta$ denotes a parameter for the lubricant, $\gamma$ denotes a constant for other parameters, and $\delta$ denotes a parameter obtained from the use conditions,
the step of determining includes a step of deciding whether or not a second mathematical formula is satisfied according to the use conditions, the second mathematical formula being expressed as:

$$F \leq 10 \dots (2),$$

the step of determining includes a first parameter calculating step of obtaining a parameter $\beta$ for the lubricant, and in the first parameter calculating step,

the lubricant is divided into a first region of the lubricant and a second region of the lubricant in a region in which a first rolling contact surface and a second rolling contact surface approach each other to form an ellipse, the first region being located between the first rolling contact surface and the second rolling contact surface, the second region being other than the first region in the region, the first rolling contact surface being a rolling contact surface of at least one of the inner ring and the outer ring, the second rolling contact surface being a rolling contact surface of each of the rolling elements, and
a characteristic value of an imaginary element assumed for the first region and the second region in an imaginary electric circuit corresponding to the rolling bearing is obtained.

2.   The method of designing a rolling bearing according to claim 1, wherein

the first region and the second region are connected in parallel in the imaginary electric circuit,
a resistive component and a capacitive component each as the imaginary element are connected in parallel in each of the first region and the second region, and
a characteristic value of the resistive component is estimated as:
[Math. 1]

$$R = Rv(T, P) \times \frac{d}{S} \dots (3)$$

from: a volume resistivity Rv of the lubricant, the volume resistivity Rv being determined by a function of a temperature T and a pressure P; a thickness d of an oil film of the lubricant in one of the first region and the second region; and an area S of the oil film of the lubricant.

3.  The method of designing a rolling bearing according to claim 2, wherein
    a characteristic value of the capacitive component is estimated as:
    [Math. 2]

$$C = \varepsilon_0 \times \varepsilon(T, P) \times \frac{S}{d} \dots (4)$$

from: a dielectric constant $\varepsilon_0$ of a vacuum; a relative dielectric constant $\varepsilon$ of the lubricant, the relative dielectric constant $\varepsilon$ being determined by the function of the temperature T and the pressure P; the area S of the oil film, the area S being an area in which a pair of electrodes face each other, the pair of electrodes constituting a capacitance assumed for one of the first region and the second region; and the thickness d of the oil film as the lubricant in one of the first region and the second region.

4.  The method of designing a rolling bearing according to claim 2, wherein

    each of the first region and the second region includes a switch connected in parallel with the resistive component and the capacitive component,
    the switch is turned on when a voltage applied to the lubricant exceeds a dielectric breakdown voltage, and
    the dielectric breakdown voltage of the switch is estimated as:
    [Math. 3]

$$Vsh = V(P, T, \varepsilon, R) \times d \dots (5)$$

from: a voltage V determined by values of the pressure P, the temperature T, and a relative dielectric constant $\varepsilon$ of the lubricant, and the resistive component; and the thickness d of the oil film of the lubricant.

5.  The method of designing a rolling bearing according to claim 1, wherein, in the first parameter calculating step, the parameter β for the lubricant is calculated in consideration of changes in volume resistivity, viscosity, dielectric constant, and dielectric breakdown strength of the lubricant according to an operating temperature of the rolling bearing including the lubricant.

6.  The method of designing a rolling bearing according to claim 1, wherein

    the step of determining further includes:

    a second parameter calculating step of obtaining the mechanical parameter α and the constant γ for the other parameters;
    a third parameter calculating step of obtaining the parameter δ obtained from the use conditions; and
    a step of calculating an F value obtained by the first mathematical formula from: the mechanical parameter α, the parameter β for the lubricant, and the constant γ for the other parameters, which are obtained in the first parameter calculating step and the second parameter calculating step; and the parameter δ obtained from the use conditions, the first mathematical formula being expressed as:

$$F = f(\alpha, \beta, \gamma, \delta) \dots (1),$$

    in the third parameter calculating step, the parameter δ obtained from the use conditions is obtained based on an output value obtained through calculation by inputting the use conditions to the imaginary electric circuit assembled by assuming, as an element, a portion formed of the inner ring, the outer ring, the rolling elements, and the lubricant that constitute the rolling bearing, and
in the step of calculating an F value, the mechanical parameter $\alpha$, the parameter $\beta$ for the lubricant, the constant $\gamma$ for the other parameters, and the parameter $\delta$ obtained from the use conditions are substituted into the first mathematical formula.

7. The method of designing a rolling bearing according to claim 6, wherein

in the second parameter calculating step, a characteristic value of an imaginary coating capacitive component assumed for an insulation coating formed on at least one of the inner ring and the outer ring in the imaginary electric circuit is obtained, and
the characteristic value of the imaginary coating capacitive component is estimated as:
[Math. 4]

$$Cc = \varepsilon_0 \times \varepsilon \times \frac{2\pi}{\ln\left(\frac{b}{a}\right)} \times L \ldots (6)$$

from: a dielectric constant $\varepsilon_0$ of a vacuum; a relative dielectric constant $\varepsilon$ of the insulation coating; an inner radius a of the insulation coating; an outer radius b of the insulation coating; and a width L of the rolling bearing.

8. The method of designing a rolling bearing according to claim 6 or 7, wherein

in the second parameter calculating step, an impedance value of a grounding mechanism that connects the inner ring and the outer ring is measured, and
it is decided from the impedance value of the grounding mechanism whether the grounding mechanism has a capacitive component or an inductive component.

9. The method of designing a rolling bearing according to claim 8, wherein

a decision is made as to whether the grounding mechanism includes a series circuit or a parallel circuit, the series circuit and the parallel circuit each being formed of a resistive component and a reactance component that is at least one of the capacitive component and the inductive component, and
in the decision,

a first impedance value of the grounding mechanism based on an assumption that the reactance component and the resistive component are connected in series is measured, and a second impedance value of the grounding mechanism based on an assumption that the reactance component and the resistive component are connected in parallel is measured, and
the first impedance value and the second impedance value are compared.

10. The method of designing a rolling bearing according to claim 1 or 2, wherein the step of determining is repeated until the second mathematical formula is satisfied by the step of deciding, the second mathematical formula being expressed as:

$$F \leq 10 \quad \cdots \quad (2).$$

11. A method of designing a rolling bearing, the method comprising the steps of:

preparing a first mathematical formula that allows a decision to be made as to whether or not suppression of electrolytic corrosion in a rolling bearing is enabled, the rolling bearing including an inner ring, an outer ring disposed on an outer circumferential side of the inner ring, a plurality of rolling elements rollably disposed between the inner ring and the outer ring, and a lubricant; and
determining configurations of the inner ring, the outer ring, and the plurality of rolling elements based on use conditions for the rolling bearing, wherein
the first mathematical formula is expressed as:

$$F = f(\alpha, \beta, \gamma, \delta) \ldots (1),$$

where $\alpha$ denotes a mechanical parameter for the inner ring, the outer ring, and the plurality of rolling elements, $\beta$ denotes a parameter for the lubricant, $\gamma$ denotes a constant for other parameters, and $\delta$ denotes a parameter obtained from the use conditions, and
the step of determining includes a step of deciding whether or not a second mathematical formula is satisfied according to the use conditions, the second mathematical formula being expressed as:

$$F \leq 10 \ldots (2).$$

12. The method of designing a rolling bearing according to claim 11, wherein

the step of determining includes a first parameter calculating step of obtaining a parameter $\beta$ for the lubricant, and
in the first parameter calculating step,

the lubricant is divided into a first region of the lubricant and a second region of the lubricant in a region in which a first rolling contact surface and a second rolling contact surface approach each other to form an ellipse, the first region being located between the first rolling contact surface and the second rolling contact surface, the second region being other than the first region in the region, the first rolling contact surface being a rolling contact surface of at least one of the inner ring and the outer ring, the second rolling contact surface being a rolling contact surface of each of the rolling elements, and
the parameter $\beta$ for the lubricant is calculated, considering that a volume resistivity, a viscosity, a dielectric constant, and a dielectric breakdown strength are different between the first region and the second region due to a pressure.

13. The method of designing a rolling bearing according to claim 12, wherein, in the first parameter calculating step, the parameter $\beta$ for the lubricant is calculated in consideration of changes in volume resistivity, viscosity, dielectric constant, and dielectric breakdown strength of the lubricant according to an operating temperature of the rolling bearing including the lubricant.

14. The method of designing a rolling bearing according to claim 12 or 13, wherein

the step of determining further includes:

a second parameter calculating step of obtaining the mechanical parameter $\alpha$ and the constant $\gamma$ for the other parameters;
a third parameter calculating step of obtaining the parameter $\delta$ obtained from the use conditions; and
a step of calculating an F value obtained by the first mathematical formula from: the mechanical parameter $\alpha$, the parameter $\beta$ for the lubricant, and the constant $\gamma$ for the other parameters, which are obtained in the first parameter calculating step and the second parameter calculating step; and the parameter $\delta$ obtained from the use conditions, the first mathematical formula being expressed as:

$$F = f(\alpha, \beta, \gamma, \delta) \ldots (1),$$

in the third parameter calculating step, the parameter $\delta$ obtained from the use conditions is obtained based on an output value obtained through calculation by inputting the use conditions to an imaginary electric circuit assembled by assuming, as an element, a portion formed of the inner ring, the outer ring, the rolling elements, and the lubricant that constitute the rolling bearing, and
in the step of calculating an F value, the mechanical parameter $\alpha$, the parameter $\beta$ for the lubricant, the constant $\gamma$ for the other parameters, and the parameter $\delta$ obtained from the use conditions are substituted into the first mathematical formula.

15. The method of designing a rolling bearing according to claim 11 or 12, wherein the step of determining is repeated until the second mathematical formula is satisfied by the step of deciding, the second mathematical formula being expressed as:

$$F \leq 10 \quad \cdots \quad (2).$$

$$F \leq 10 \quad \cdots \quad (2).$$

FIG.1

FIG.2

EP 4 764 240 A1

FIG.3

FIG.4

EP 4 764 240 A1

## FIG.5

MATHEMATICAL FORMULA PREPARING STEP — S10

BEARING CONFIGURATION DETERMINING STEP — S20

## FIG.6

FIRST PARAMETER CALCULATING STEP — S21

DIVIDE LUBRICANT — S21A

SECOND PARAMETER CALCULATING STEP — S22

CONSIDER OPERATING TEMPERATURE OF ELECTRIC MOTOR — S21B

THIRD PARAMETER CALCULATING STEP — S23

F VALUE DERIVING STEP — S24

F≤10? — S25

Yes

END DESIGN

No

## FIG.7

13A  13

11A

11

LQ2  LQ1  LQ2

LQ

FIG.8

BEARING CONFIGURATION
DETERMINING STEP — S20

↓

PREPARING STEP — S100

↓

COMBINING STEP — S200

↓

LUBRICANT INTRODUCING
STEP — S300

FIG.9

FIG.10

FIG.11

FIG.12

FIG.13

**FIG.14**

## INTERNATIONAL SEARCH REPORT

| International application No. |
| --- |
| **PCT/JP2024/028244** |

**A. CLASSIFICATION OF SUBJECT MATTER**

*F16C 19/06*(2006.01)i; *F16C 19/52*(2006.01)i; *F16C 33/58*(2006.01)i; *F16C 33/66*(2006.01)i
FI: F16C19/06; F16C33/66 Z; F16C33/58; F16C19/52

According to International Patent Classification (IPC) or to both national classification and IPC

**B. FIELDS SEARCHED**

Minimum documentation searched (classification system followed by classification symbols)

F16C19/06; F16C19/52; F16C33/58; F16C33/66

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2014-190508 A (TOCALO CO., LTD.) 06 October 2014 (2014-10-06) entire text, all drawings | 1-15 |
| A | JP 2016-014465 A (NSK LTD.) 28 January 2016 (2016-01-28) entire text, all drawings | 1-15 |
| A | JP 2021-050318 A (JTEKT CORP.) 01 April 2021 (2021-04-01) entire text, all drawings | 1-15 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 October 2024** | **22 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/028244**

| Patent document cited in search report | | | Publication date (day/month/year) | Patent family member(s) | | | Publication date (day/month/year) |
|---|---|---|---|---|---|---|---|
| JP | 2014-190508 | A | 06 October 2014 | CN | 105051390 | A | |
| JP | 2016-014465 | A | 28 January 2016 | (Family: none) | | | |
| JP | 2021-050318 | A | 01 April 2021 | US | 2024/0101825 | A1 | |
| | | | | entire text, all drawings | | | |
| | | | | CN | 114423850 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4599769 B

- JP 4177057 B